Europäisches Patentamt

European Patent Office

Office européen des brevets

(19)

(11) Veröffentlichungsnummer : **0 464 413 B1**

(12)

# EUROPÄISCHE PATENTSCHRIFT

(45) Veröffentlichungstag der Patentschrift :
**24.08.94 Patentblatt 94/34**

(51) Int. Cl.$^5$ : **F16H 47/04**

(21) Anmeldenummer : **91109590.9**

(22) Anmeldetag : **11.06.91**

(54) **Hydrostatisch-mechanisch leistungsverzweigtes Mehrgang-Lastschaltgetriebe.**

(30) Priorität : **06.07.90 DE 4021643**

(43) Veröffentlichungstag der Anmeldung :
**08.01.92 Patentblatt 92/02**

(45) Bekanntmachung des Hinweises auf die
Patenterteilung :
**24.08.94 Patentblatt 94/34**

(84) Benannte Vertragsstaaten :
**DE FR GB IT NL SE**

(56) Entgegenhaltungen :
**EP-A- 0 195 452**
**EP-A- 0 365 772**
**EP-A- 0 411 371**
**US-A- 4 043 227**

(73) Patentinhaber : **CLAAS OHG**
**Postfach 11 40**
**D-33426 Harsewinkel (DE)**

(72) Erfinder : **Fredriksen, Nils**
**Remser Weg 8**
**W-4834 Harsewinkel (DE)**
Erfinder : **Mohr, Jan-Hendrik**
**Frankfurter Strasse 4**
**W-3587 Borken (Hessen) (DE)**

(74) Vertreter : **Hanewinkel, Lorenz, Dipl.-Phys.**
**Patentanwalt**
**Ferrariweg 17a**
**D-33102 Paderborn (DE)**

## Beschreibung

Die Erfindung betrifft ein stufenloses Lastschaltgetriebe mit einer hydrostatischmechanischen Leistungsverzweigung durch ein hydrostatisches Verstellgetriebe, ein vierwelliges Doppelplanetengetriebe und nachgeschaltete Ganggetriebe, wobei eine Eingangswelle über ein erstes Stirnradgetriebe in permanenter Wirkverbindung mit dem Stellgetriebe steht und mit einer Stegwelle des zweiten der Planetengetriebe und dem Außenrad des ersten der Planetengetriebe gesteuert kuppelbar ist, und eine Ausgangswelle des hydrostatischen Stellgetriebes über eine Zahnradstufe mit einer Sonnenradwelle, auf der die beiden Sonnenräder der Planetengetriebe angeordnet sind, verbunden ist und eine Stegwelle des ersten Planetengetriebes über ein erstes Ganggetriebe und eine zugehörige Schaltkupplung eines 3. Ganges mit einer ersten Zwischenwelle gesteuert verbindbar ist sowie eine Außenradwelle des zweiten Planetengetriebes über weitere Ganggetriebe und zugehörige Schaltkupplungen eines 2. und eines 4. Ganges mit der Zwischenwelle gesteuert kuppelbar sind, und eine Getriebeausgangswelle über ein erstes Gruppengetriebe und eine zugehörige erste Gruppenschaltkupplung mit der Zwischenwelle verbindbar ist, und die Getriebeausgangswelle über ein zweites Gruppengetriebe und eine zugehörige zweite Gruppenschaltkupplung mit einer zweiten Zwischenwelle verbindbar ist, die mittels einer Schaltkupplung eines 5. Ganges mit der ersten Zwischenwelle gesteuert verbindbar ist.

Ein derartiges Getriebe ist aus DE-A- 36 05 203 bekannt. Es ermöglicht ein stufenloses Schalten aller acht Gänge über ein hydrostatisches Verstellgetriebe mit einer mechanischen Verzweigung über ein Doppelplanetengetriebe. Bei diesem Getriebe besteht die Welle, auf die die Ganggetriebe des 1. bis 4. Ganges wirken, aus Zwischenwellen, die über Gruppengetriebe mit zugehörigen Gruppenschaltkupplungen mit einer Getriebeausgangswelle gesteuert verbindbar sind. Das Anfahren erfolgt hierbei mit einer verschleiß- und verlustbehafteten Reibungskupplung, die sowohl dem mechanischen als auch dem hydrostatischen Getriebe vorgeordnet ist. Auch sind die Gangschaltkupplungen synchronisierend und dadurch verschleißbehaftet. Die Kupplungen des 1. bis 4. Ganges sind auf den Hohlwellen des Planetengetriebes angeordnet, wodurch sie relativ groß sind. Ein Reversierbetrieb des gesamten Getriebes ist nicht vorgesehen, so daß das Getriebe nur beschränkt einsatzfähig ist.

Weiterhin ist aus DE-A- 38 15 780 ein hydrostatisch mechanisch leistungsverzweigtes 4-Ganggetriebe bekannt, wobei eine Eingangswelle über ein erstes Stirnradgetriebe in permanenter Wirkverbindung mit dem Stellgetriebe steht und außerdem über ein schaltbares Wendegetriebe mit einer Stegwelle des zweiten der Planetengetriebe und dem Außenrad des ersten der Planetengetriebe gesteuert kuppelbar ist und eine Ausgangswelle des hydrostatischen Stellgetriebes über eine Zahnradstufe mit einer Sonnenradwelle, auf der die beiden Sonnenräder der Planetengetriebe angeordnet sind, verbunden ist und eine Stegwelle des ersten Planetengetriebes über erste Ganggetriebe und zugehörige Schaltkupplungen eines 1. und eines 3. Ganges mit einer Welle gesteuert verbindbar sind, sowie eine Außenradwelle des zweiten Planetengetriebes über weitere Ganggetriebe und zugehörige Schaltkupplungen eines 2. und eines 4. Ganges mit der Welle gesteuert kuppelbar sind. Dieses Getriebe erbringt in Vor- und Rückwärtsrichtung den gleichen Wandlungsgrad, der jedoch wegen der vier Gänge beschränkt ist, so daß das Getriebe nur für Fahrzeuge aber nicht für hoch belastete Landmaschinen verwendbar ist. Außerdem wird das Wendegetriebe mit Synchronisierungskupplungen geschaltet, die Verschleiß unterliegen und Energieverlust beim Synchronisieren bringen.

Weiterhin ist aus DE-C- 31 47 447 ein hydrostatisch-mechanisches Stellkoppelgetriebe mit eingangsseitiger Leistungsverzweigung bekannt, zu dem zwei dreiwellige Umlaufgetriebe I und II gehören, von denen eine Differenzwelle des ersten Umlaufgetriebes I mit der Summenwelle des zweiten Umlaufgetriebes II eine Einheit mit der Antriebswelle bilden und von denen die zweite Differenzwelle des ersten Umlaufgetriebes I mit einer Differenzwelle des zweiten Umlaufgetriebes II gekoppelt ist und über ein hydrostatisches Stellgetriebe mit der Antriebswelle in Verbindung steht und von denen schließlich die Summenwelle des ersten Umlaufgetriebes I einerseits und die zweite Differenzwelle des zweiten Umlaufgetriebes II andererseits über Nachschaltstufen wechselweise auf die Abtriebswelle wirken können, so daß, durch jeweiliges Durchfahren des Verstellbereiches des hydrostatischen Getriebes, mehrere sich aneinanderreihende stufenlose Verstellbereiche den Gesamtverstellbereich der Übersetzung bilden, wobei die Nachschaltstufen in ihren Übersetzungen so abgestimmt sind, daß der Verstellbereichswechsel bei synchronen Drehzahlen beidseitig der zu schaltenden Kupplungen lastfrei und ohne Zugkraftunterbrechung erfolgt, wobei jedoch zum Anfahren eine Reibungskupplung vorgesehen ist. Das bekannte Getriebe hat 4 Vorwärtsgänge und einen Rückwärtsgang und ist somit für einen PKW-Betrieb geeignet; die Gesamtwandlung der Übersetzung beträgt ca. einen Faktor 8, der für Nutzfahrzeuge meist nicht ausreicht.

Weiterhin ist aus DE-A- 24 23 626 ein Vierganggetriebe mit hydrostatischer Leistungsverzweigung bekannt, be dem eine Wirkungsgraderhöhung dadurch zu erreichen ist, daß in solchen Betriebspunkten, in denen die Abtriebwelle des hydraulischen Wandlers praktisch still steht, diese durch eine Kupplung gehäuseseitig festgesetzt wird, so daß nur das mechanische Getriebe wirksam ist und der Wandler sich fast verlustlos im Leerlauf befindet. Weiterhin ist es vorgesehen, in Betriebspunkten, in denen die Eingangswelle und die Ausgangswelle des hydraulischen Wandlers einen Gleichlauf aufweisen, durch eine weitere, getrennte Kupplung diese Wellen fest miteinander zu verbinden, so daß der Wandler verlustarm mitläuft und die Leistung rein mechanisch übertragen wird.

Es ist Aufgabe der Erfindung das eingangs beschriebene hydraulischmechanisch verstellbare Koppelgetriebe dahingehend zu verbessern, daß die Gesamtwandlung der Übersetzung in beiden Fahrtrichtungen gegeben ist, die Zahl der synchronisierenden Kupplungen verringert ist, und die Gesamtwandlung um einen rein hydraulischen Anfahrbereich vergrößert ist.

Die Lösung der Aufgabe besteht darin,

- daß die zweite Zwischenwelle über ein Getriebe eines 1. Ganges mit einer getrennt steuerbaren Kupplung zur Stegwelle verbindbar ist,
- daß die Eingangswelle über ein einschaltbares Windegetriebe mit der Stegwelle verbindbar ist,
- daß ein mit der Sonnenradwelle in einer Wirkverbindung stehendes Zwischengetriebe über eine getrennt steuerbare Schaltkupplung zum Anfahren mit der Zwischenwelle gesteuert kuppelbar ist, und sonstigen Wendegetriebe-, Ganggetriebe- und Gruppengetriebe-Schaltkupplungen als einfache Klauenkupplungen ausgebildet sind, und
- daß durch eine Steuervorrichtung abhängig von Signalen von Bedienelementen, wenn ein Verlassen des Stillstandes der Ausgangswelle vorgegeben ist, die Kupplung des 0. Ganges, des 1. und des 5. Ganges eingeschaltet sind und abhängig von der Stellung eines Gruppenwahlschalters eine der Gruppengetriebekupplungen eingeschaltet ist und eine Verstellung des Wandlers vorgabegemäß gesteuert erfölgt und ein Übergang in einen hydrostatisch-mechanisch leistungsverzweigten Betriebszustand jeweils bei einer Drehzahlgleichheit zwischen den zu schaltenden Kupplungselementen des Wendegetriebes, abhängig von dem Stellungssignal eines Vor-Rückwärtswählers, durch ein Einschalten der Vorwärtskupplung oder der Rückwärtskupplung eingestellt wird und daß im Falle, daß die Kupplung der unteren Getriebegruppenschaltung bestätigt ist, die Einzelkupplung des 1. Ganges bis zu einem Übergang in den 6. Gang eingeschaltet gehalten ist.

Eine weitere Lösung ist in dem Kennzeichen des Nebenanspruchs 22 angegeben.

Die neuartige Getriebe- und Schaltungsanordnung ermöglicht es vorteilhaft, im Stillstand des Abtriebes die für ein Anfahren erforderlichen Kupplungen zu schließen, die keinem Verschleiß unterliegen, und über das hydrostatische Stellgetriebe wahlweise vor- oder rückwärts stufenlos den Abtrieb zum Anfahren hochzufahren und zu reversieren, wodurch eine verschleiß-, und verlusterzeugende Anfahrkupplung entfällt.

Eine weitere vorteilhafte Ausgestaltung gestattet es, nach Bedarf, ohne den langsamen Gruppengang durchfahren zu müssen, also in einem höheren, nämlich dem 5. Gang, aus einem Stillstand des Abtriebes heraus unmittelbar mit verschleißfrei eingeschalteten entsprechenden Kupplungen mit dem Stellgetriebe stufenlos wahlweise vor- oder rückwärts hochzufahren und zu reversieren, wodurch bei geringer Last ein schnelles, bequemes Anfahren erbracht wird und zahlreiche energiezehrende und eine Abnutzung verursachende Stell- und Kupplungsvorgänge der unteren Gänge erspart werden.

Weiterhin wird in der Anfahrphase, das heißt im sogenannten 0. Gang, durch die Anordnung der Hohlwelle auf der Zwischenwelle, die geeignete Wahl der zugehörigen Kupplunen sowie durch eine vorteilhafte Schaltlogik der Getriebesteuerung, die Eingangswelle des Doppelplanetensatzes I/II im lastfreien Zusand "rückwärts" gerichtet, bis hin zum eingangsseitigen Wendegetriebe, angetrieben, so daß auslegungsgemäß und durch die Anordnung des Wendegetriebes im mechanischen Leistungsverzweigungsstrang beim Erreichen der maximalen Verstellung der hydrostatischen Verstelleinheit jeweils für Vorwärts- oder Rückwärtsfahrtrichtung, an der Kuppelstelle der Vorwärts- bzw. Rückwärtskupplung des Wendegriebes Drehzahlgleichheit der beiden zu kuppelnden Elemente herrscht, und hier, je nach der Stellung der Gruppengetriebekupplungen, zum 1. Gang bzw. zum 5. Gang bei Drehzahlgleichheit reibungsverlustfrei geschaltet wird. Durch diese vorteilhafte Ausgestaltung ist die Verwendung von verschleiß- und verlusterzeugenden Synchronsisierungs-Kupplungen für das Wendegetriebe nicht erforderlich. Hohe Drehzahldifferenzen der bekannten Getriebe erfordern in Verbindung mit den beträchtlichen rotatorischen Massen zur Drehrichtungsumkehr der zu synchronisierenden Komponenten kräftig dimensionierte Synchronkupplungen des Wendegetriebes, die platzraubend sind und hohe Kosten verursachen. Es können dafür somit erfindungsgemäß kleine verlustarme Klauenkupplungen eingesetzt werden. Auch der Übergang zwischen dem hochübersetzten, langsamen und dem geringübersetzten, schnellen Gruppengang kann vorteilhaft durch einfache Klauenkupplungen an der Getriebeausgangswelle hergestellt werden, da, durch eine geeignete Wahl des Schaltungsablaufes zum Schaltzeitpunkt beidseitig der entsprechenden Kupplungen Drehzahlgleichheit vorliegt. Ein Synchronisierarbeitsverlust entsteht bei diesem Gruppenübergang nicht.

Durch diese Lösung wird die Anzahl der systembedingt erforderlichen Synchronisierungskupplungen, die das kontinuierliche und zugkraftunterbrechungsfreie Durchfahren der beiden Gruppengänge ermöglichen, auf eine Minimalzahl, nämlich zwei, reduziert. Diese beiden Synchronisierkupplungen leisten in den Schaltverläufen des 5. Ganges, und zwar die eine beim Hochschalten und die andere beim Herunterschalten, die nötige vorbereitende Synchronisierungsarbeit, und zwar jeweils immer im lastfreien Zustand, also verlustarm.

Diese Ausführung des Getriebes erbringt somit sowohl vorwärts als auch rückwärts acht stufenlos verstellbare Fahrbereiche, wobei sämtliche Übergänge von Fahrbereich zu Fahrbereich unter Last schaltbar sind und die Antriebsleistung leistungsverzweigt, das heißt teils hydrostatisch und teils mechanisch, durch das Getriebe fließt. Zu den acht Gängen kommt der sogenannte 0. Gang, der das Anfahren aus dem Stillstand und das Reversieren bewirkt und in dem die Leistung in ausschließlich hydrostatischer Form durch das Getriebe fließt.

Die volle Umkehrbarkeit der Wandlung erlaubt vorteilhaft den Einsatz des Getriebes in Transport- und Arbeitsvorrichtungen, bei denen dadurch ein Wenden zur Fahrtrichtungsumkehr erübrigt wird. Dies sind zum Beispiel Forst- und Baumaschinen und landwirtschaftliche Fahrzeuge mit drehbarem Fahrersitz und Rückfahrteinrichtung, daß heißt die sogenannten Zweiwegetracs.

Eine Auslegung dieses Getriebes ergibt mit konstruktiv vorteilhafter Wahl der Planetensatzstandübersetzungen von

$$i_{IO} = -4,O \text{ und } i_{IIO} = -3,O$$

einen - bezogen auf die größte übertragbare Leistung - maximal erforderlichen hydrostatischen Leistungsanteil von 33% und eine gesamte Momenten- und Übersetzungswandlung in dem leistungsverzweigten Antriebszustand von etwa 1 : 60, verteilt auf die acht Fahrbereiche, deren Einzelwandlung 1 : 1,667 beträgt.

Durch einen derart geringen, maximal vorkommenden, hyrdrostatischen Leistungsanteil ist ein guter Gesamtwirkungsgrad erreicht.

Die Vorrichtung ist anhand der Figuren 1 bis 5 beschrieben.

Fig. 1    zeigt ein Übersichtsbild, schematisch;

Fig. 2    zeigt das Getriebeschema;

Fig. 3    zeigt den Gesamtwirkungsgrad und den relativen hydrostatischen Leistungsanteil abhängig von den verschiedenen Gängen und der Verzweigung;

Fig. 4    zeigt die Drehzahlverläufe der Planetensatzwellen;

Fig. 5    zeigt ein Getriebeschema einer weiteren Getriebeausführung.

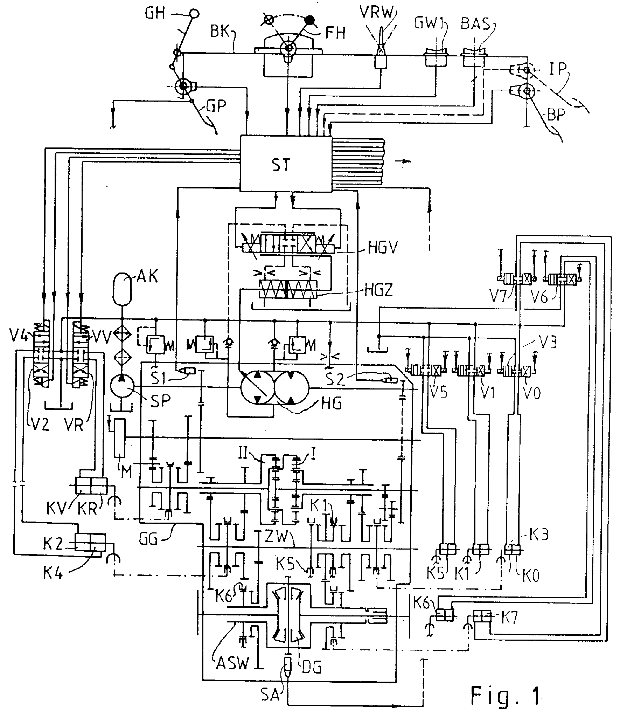

Fig. 1 zeigt ein schematisches Übersichtsbild einer Getriebeanordnung und der Steuervorrichtung (ST) mit den Bedienelementen und Steuergliedern. In einer Bedienkanzel (BK) sind die Bedienelemente angeordnet, von denen ein Gaspedal (GP) und ein Handgashebel (GH) direkt auf den Dieselmotor (M) einwirken. Außerdem wird deren Stellung der Steuerelektronik (ST) eingangsseitig gemeldet. Weiterhin sind ein Fahrhebel (FH), der z.B. die gewünschte Fahrgeschwindigkeit vorgibt, ein Vor-Rückwärtswahlhebel (VRW), ein Getriebe-Gruppenwahlschalter (GW1), eine Betriebsarten-Wahlschalter (BAS) und ein Inchpedal (IP) sowie ein Bremspedal (BP) eingangsseitig mit der Steuervorrichtung (ST) verbunden. Diese wertet die Signale dieser Bedienelemente in geeigneter Weise programmgesteuert aus und gibt ausgangsseitig Stellsignale ab, mit denen elektromagnetisch gesteuerte hydraulische Ventile (VV, VR, V0 - V7), die die Getriebekupplungen (KV ,KR, KO - K7) mit Hilfe entsprechender hydraulischer Stellzylinder und zugehöriger Schaltgabeln ein- und ausschalten, beaufschlagt werden. Die hydraulischen Ventile (VV, VR; V0, V3; V2, V4) können jeweils paarweise ausgebildet sein und haben eine Neutralstellung, so daß jeweils einander ausschließende Kupplungen (KV, KR, K2, K4; K0, K3) an ein zugehöriges Zylinderpaar (VV, VR; V2, V4, V0, V3) angeschlossen sind und dadurch in eine Neutralstellung verbringbar und von dort aus zum einen und anderen Getrieberad wahlweise kuppelbar sind.

Dem hydrostatischen Stellgetriebe (HG) sind ein- und ausgangsseitig Drehgeschwindigkeitssensoren (S1, S2) zugeordnet, und an der Ausgangswelle (ASW), die eine Summenwelle des ausgangsseitigen Differentialgetriebes (DG) ist, ist ein weiterer Drehgeschwindigkeitssensor (SA) angeordnet. Weiterhin sind sämtliche Kupplungsstellzylinder mit je einem, in Fig. 1 nicht dargestellten Lagesensor ausgestattet. Die Signale dieser Sensoren sind der Steuerelektronik (ST) zugeführt, und sie werden dort derart ausgewertet, daß jeweils bei einem vorgegebenen Übersetzungsverhältnis zwischen der Eingangs- und der Ausgangsdrehzahl und bei einer Drehzahlgleichheit beidseitig der jeweils neu einzuschaltenden Kupplung eine kontrollierte Gangänderung durch eine, entsprechend der Stellung der Bedienelemente herauf- oder herunterschaltende Ventil-Kupplungsbetätigung erfolgt. Außerdem steuert die Steuervorrichtung (ST) ein hydraulisches Steuerventil (HGV), das einen proportional wirkenden Hydraulik-Steuerzylinder (HGZ) beaufschlagt, der das hydrostatische Stellgetriebe (HG) steuert. Ist jeweils eine vorgegebene Geschwindigkeit oder ein vorgegebener Gang erreicht, so bildet die Steuervorrichtung (ST), mit dem Steuerventil (HGV), dem Stellgetriebe (HG) und dem zugehörigen Drehzahlsensor (S1, S2, SA) jeweils einen Regelkreis.

Sämtliche Stirnradgetriebe, die beiden Umlaufgetriebe (I, II), das Differentialgetriebe (DG) und das Stellgetriebe (HG) mit den Kupplungen und deren Stellzylinder sind in einem Getriebegehäuse (GG) kompakt untergebracht. Eine Speisepumpe (SP) ist an der Eingangswelle angeordnet, so daß ständig eine Steuer- und Füllölmenge für die Ventile und den Stellantrieb geliefert wird. Im Speisekreislauf können vorteilhaft Vorrichtungen zur Ölfilterung und Ölkühlung angeordnet sein. Ein Ölspeicher (AK) stellt im Augenblick der Gangschaltung eine genügende Ölmenge bei ausreichendem Schaltdruck sicher.

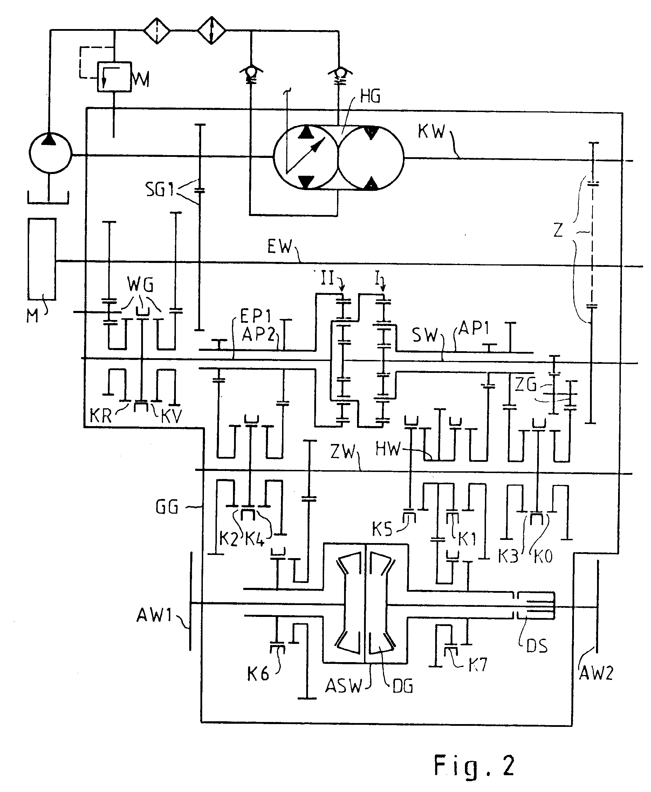

In Fig. 2 ist das Getriebegehäuse (GG) mit seinen wesentlichen Getriebeeinheiten größer als in der Übersichtsfigur dargestellt. Vom Motor (M) aus wird die Eingangswelle (EW) angetrieben, die mit einem Wendegetriebe (WG) und über ein erstes Stirnradgetriebe (SG1) mit der Eingangswelle de Verstelleinheit des hydrostatischen Stellgetriebes (HG) verbunden ist. Das Wendegetriebe (WG) ist abtriebsseitg über eine Eingangswelle (EP1) mit dem Steg des zweiten Umlaufgetriebes (II) und mit dem Außenrad des ersten Umlaufgetriebes (I) verbunden.

Das hydrostatische Getriebe (HG) besteht zweckmäßig aus einer Verstell- und einer Konstanteinheit (HR) in einer Axialkolbenbauweise. Sie ist in einer kompakten Rücken-an-Rückenbauweise im Getriebegehäuse (GG) angeordnet.

Die Ausgangswelle der Konstanteinheit (KW) steht über eine Zahnradstufe (Z) in Wirkverbindung mit den Sonnenwellen (SW) der Umlaufgetriebe (I, II). Diese Sonnenradwelle (SW) ist außerdem über ein Zwischengetriebe (ZG) mit einer zugehöirgen Kupplung (KO) mit einer Zwischenwelle (ZW) koppelbar.

Die beiden Ausgangswellen (AP1, AP2) der Umlaufgetriebe (I, II), von denen die eine mit dem Steg des ersten Umlaufgetriebes (I) und die andere mit dem Außenrad des zweiten Umlaufgetriebes (II) verbunden ist und die als Hohlwellen ausgebildet und auf der Sonnenradwelle (SW) bzw. der Eingangswelle (EP1) des Umlaufgetriebes drehbar gelagert sind, treiben je zwei Stirnradgetriebe der Gangschaltungen an, die andererseits kuppelbar mit der Zwischenwelle (ZW) verbunden sind. Drei der Kupplungen (K2, K3, K4) stellen jeweils eine direkte Verbindung zur Zwischenwelle (ZW) her, und die vierte Kopplung ist über eine Hohlwelle (HW) durch das Schließen zweier Kupplungen (K1, K5) herstellbar.

Von der Zwischenwelle (ZW) beziehungsweise von der Hohlwelle (HW) aus ist über je ein Gruppen-Stirnradgetriebe und zugehörige Gruppen-Kupplungen (K6, K7) die Abtriebssummenwelle (ASW) des ausgangsseitigen Differentialgetriebes (DG) mit seinen Ausgangswellen (AW1, AW2) antreibbar. Die eine der Gruppenkupplungen (K6) kuppelt das Gruppengetrieb für die vier langsamsten Gänge und stellt dazu eine Wirkverbindung direkt zwischen der Zwischenwelle (ZW) und der Ausgangswelle (ASW) her. Die andere der Gruppenkupplungen (K7) kuppelt das Gruppengetriebe der vier schnellsten Gänge und erbringt so die Verbindung zwischen der Hohlwelle (HW) und der Ausgangswelle (ASW). Das Differentialgetriebe (DG) kann zweckmäßig auch mit einer gesteuert betätigbaren Differentialsperre (DS) versehen sein.

Tab. 1

## Kupplungen geschaltet, 8-Gangbetrieb

| Gang | V/R | KO | K1 | K2 | K3 | K4 | K5 | K6 | K7 |
|---|---|---|---|---|---|---|---|---|---|
| | | | | Hochschalten | | | | | |
| 0 | | X | X | | | | X | X | |
| 1 | X | | X | | | | X | X | |
| 2 | X | | X | X | | | | X | |
| 3 | X | | X | | X | | | X | |
| 4 | X | | X | | | X | | X | |
| 5 | X | | X | | | A | E | | X |
| 6 | X | | | X | | | X | | X |
| 7 | X | | | | X | | X | | X |
| 8 | X | | | | | X | X | | X |
| | | | | Runterschalten | | | | | |
| 8 | X | | | | | X | X | | X |
| 7 | X | | | | X | | X | | X |
| 6 | X | | | X | | | X | | X |
| 5 | X | | X | (A1) | | E | A | | X |
| 4 | X | | X | | | X | | X | |
| 3 | X | | X | | X | | | X | |
| 2 | X | | X | X | | | | X | |
| 1 | X | | X | | | | X | X | |
| 0 | | X | X | | | | X | X | |

Das Schaltschema der Gänge im 8-Gangbetrieb und die zugehörigen Kupplungsbetätigungen sind in der Tab. 1 dargestellt. Die Endziffern der Kupplungsbezugszeichen deuten bei den meisten Gangwechseln auf die für den einzelnen Gang wesentliche Kupplung hin. Die Kupplungen, die mit V, R, KO, K1, K2, K3, K6 und K7 bezeichnet sind, sind einfache Zahnklauenkupplungen, da an ihnen zum Schaltzeitpunkt jeweils beidseitig gleiche Drehzahl herrscht. Nur die Kupplungen (K4) des 4. Ganges und die Hilfskupplung (K5) sind Synchronkupplungen und leisten Synchronisierungsarbeit. Sie sind jeweils so in einer Folge zu schalten, daß beim Hochschalten im Verlaufe des 5. Ganges zuerst eine lastfreie Ausschaltung (A) der Kupplung (K4) des 4. Ganges erfolgt und dann eine lastfreie vorbereitende und synchronisierende Einschaltung (E) der Kupplung (K5) vorgenommen wird und daß beim Runterschalten im Verlaufe des 5. Ganges zuerst eine lastfreie Ausschaltung (A) der Kupplung (K5) und dann die lastfreie, vorbereitende und synchronisierende Einschaltung (E) der Kupplung (K4) vorgenommen wird.

Mit der, also als Hilfskupplung betriebenen, Kupplung (K5) kann die Hohlwelle (HW) und somit das schnelle Gruppengetriebe, das im Verhältnis zum langsamen Gruppengetriebe eine Getriebeübersetzung aufweist, die dem Stellverhältnis des vorgeschalteten Vierganggetriebes entspricht, wahlweise mit der Zwischenwelle (ZW) in Wirkverbindung gebracht werden.

Da die Antriebsleistung im 5. Gang bei ausgeschalteter Hilfskupplung (K5) direkt über die Hohlwelle (HW) übertragen wird, wird vorteilhaft im Verlaufe dieses Ganges die lastfreie Zwischenwelle (ZW) beim Hochschal-

6

ten durch die eine Synchronkupplung (K5) und beim Herunterschalten durch die andere Synchronkupplung (K4) zum geeigneten Zeitpunkt, wie oben beschrieben, vorbereitend für den Schaltvorgang in den 6. bzw. in den 4. Gang auf die diesen Gängen entsprechenden Drehzahlen ansynchronisiert.

Hierdurch ist das zweimalige Durchfahren des vorgeschalteten Vierganggetriebes unter Vermeidung einer Zugkraftunterbrechung beim Übergang von der langsamen in die schnelle Getriebegruppe und umgekehrt sichergestellt.

Eine vorteilhafte Minimierung der erforderlichen Synchronisierungsarbeit der einen Synchronkupplung (K5) beim Hochschalten und der anderen Synchronkupplung (K4) beim Herunterschalten wird vorteilhaft dadurch erreicht, daß im Schaltablaufsinne betrachtet, die im 5. Gang nicht leistungsführenden Kupplungen (K4, K5) der davorliegenden Gänge 4 beziehungsweise 6 möglichst spät, jedoch vor dem Einschalten der jeweils zugehörigen Synchronkupplung (K5, K4) zum Zwecke einer Drehzahlannäherung ausgeschaltet werden.

Das Synchronisieren beim Herunterschalten durch die Ausschaltung einer Kupplung im geeigneten Zeitpunkt kann alternativ durch den in der Tabelle mit (A1) bezeichneten Abschaltvorgang der Kupplung des 2. Ganges (K2) erfolgen. Die 4-Gang-Betriebsart, bei der bereits im Stillstand der schnelle Gruppengang eingeschaltet ist, und nach dem 0. Gang nur die vier oberen Gänge benutzt werden, erfolgt völlig ohne Synchronisation, da ein Übergang zwischen den Gruppengängen nicht erfolgt. Das Schaltschema zur 4-Gang-Betriebsart ist in Tab. 2 gegeben.

Tab. 2

### Kupplungen geschaltet, 4-Gangbetrieb

| Gang | V/R | K0 | K1 | K2 | K3 | K4 | K5 | K6 | K7 |
|------|-----|----|----|----|----|----|----|----|----|
| **Hochschalten** | | | | | | | | | |
| 0 | | X | X | | | | X | | X |
| 5 | X | | X | | | | X | | X |
| 6 | X | | | X | | | X | | X |
| 7 | X | | | | X | | X | | X |
| 8 | X | | | | | X | X | | X |
| **Runterschalten** | | | | | | | | | |
| 8 | X | | | | | X | X | | X |
| 7 | X | | | | X | | X | | X |
| 6 | X | | | X | | | X | | X |
| 5 | X | | X | | | | X | | X |
| 0 | | X | X | | | | X | | X |

Für ein Auslegungsbeispiel des neuartigen Getriebes sind die vorgegebenen Drehzahlen an der Welle (KW) der hydrostatischen Konstanteinheit (HG), bei denen herauf- bzw. herunterzuschalten ist, in Tab. 3 jeweils für Drehzahlgleichheit an den zu schaltenden Kupplungen und bei einer angenommenen konstanten Eingangsdrehzahl von $n_e$ = 2200 U/Min. angegeben.

Tab. 3

Vorwärts:

| Gangwechsel | Kupplungen | | | Drehzahlen U/Min. |
| | EIN | | AUS | nHG |
| --- | --- | --- | --- | --- |
| 0 - 1 | V | | KO | 4882,394 |
| 1 - 2 | K2 | | K5 | 4853,333 |
| 2 - 3 | K3 | | K2 | 4853,333 |
| 3 - 4 | K4 | | K3 | 4853,333 |
| 4 - 5 | K7 | K5 | K6  K4 | 4811,352 |
| 5 - 6 | K2 | | K1 | 4853,333 |
| 6 - 7 | K3 | | K2 | 4853,333 |
| 7 - 8 | K4 | | K3 | 4853,333 |

Rückwärts:

| | EIN | | AUS | nHG |
| --- | --- | --- | --- | --- |
| 0 - 1 | R | | K0 | 4795,209 |
| 1 - 2 | K2 | | K5 | 4766,667 |
| 2 - 3 | K3 | | K2 | 4766,667 |
| 3 - 4 | K4 | | K3 | 4766,667 |
| 4 - 5 | K7 | K5 | K6  K4 | 4725,436 |
| 5 - 6 | K2 | | K1 | 4766,667 |
| 6 - 7 | K3 | | K2 | 4766,667 |
| 7 - 8 | K4 | | K3 | 4766,667 |

-----------------------------------------------------------------------------

Die Ausgangsdrehzahl und die Eingangsdrehzahl des hydrostatischen Stellgetriebes (HG) werden mit den Drehzahlsensoren (S2, S1), Fig. 1, ermittelt. In der Steuervorrichtung (ST) wird aus deren Ausgangssignal ständig ein Verhältnis gebildet, das laufend mit dem angegebenen, Verhältnis verglichen wird, bei dem eine Drehzahlgleichheit an den Kupplungsteilen herrscht. Bei Erreichen dieses Verhältnisses ist jeweils die Schaltbedingung gegeben, und es wird ein Schaltvorgang ausgelöst, sofern weiter eine Gangveränderung vorgegeben ist.

Gute Gesamtwirkungsgrade des Getriebes sind durch niedrige hydrostatische Leistungsanteile sichergestellt. Durch eine vorteilhafte Wahl der Standübersetzung der Planetensätze sind die hydrostatischen Leistungsanteile und das Einzelstellverhältnis und die Einzelwandlung festgelegt. Im Auslegungsbeispiel liegt der relative hydrostatische Leistungsanteil, daß heißt, die Leistung, die bezogen auf die Gesamtleistung des Getriebes das hydrostatische Stellgetriebe jeweils bei den Endeinstellungen durchfließt, vorteilhaft nur zwischen -33% und +20%.

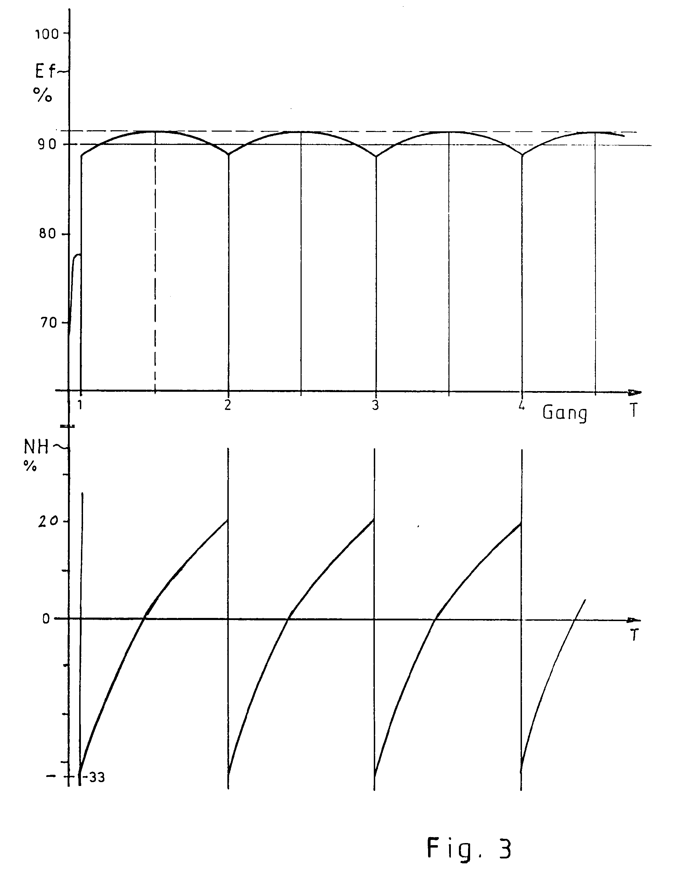

Fig. 3 zeigt den Verlauf der hydrostatischen Leistungsanteile (NH) und die Wirkungsgrade (Ef) des Gesamtgetriebes in Abhängigkeit der eingeschalteten Gänge. Die Wirkungsgrade sind dort am niedrigsten, wo die hydrostatischen Leistungsanteile am größten sind, und dort am größten, wo keine hydrostatische Leistung benötigt wird, d.h. bei NH = O.

Eine geeignete Getriebeauslegung für ein Zugfahrzeug erbringt in Verbindung mit einer geeignete Achsübersetzung und Reifenauslegung Fahrgeschwindigkeiten gem. Tab. 4.

Tab. 4

| Gang | Antriebsart | Fahrgeschwindigkeiten (km/h) | | |
|------|-------------|--------|-------|------|
| | | Anfang | Mitte | Ende |
| 0 | vollhydrostatisch | -0,84 | 0 | 0,84 |
| 1 | leistungsverzweigt | 0,84 | 1,12 | 1,39 |
| 2 | " | 1,39 | 1,86 | 2,32 |
| 3 | " | 2,32 | 3,10 | 3,87 |
| 4 | " | 3,87 | 5,16 | 6,45 |
| 5 | " | 6,45 | 8,60 | 10,75 |
| 6 | " | 10,75 | 14,3 | 17,9 |
| 7 | " | 17,9 | 23,9 | 29,9 |
| 8 | " | 29,9 | 39,9 | 49,8 |

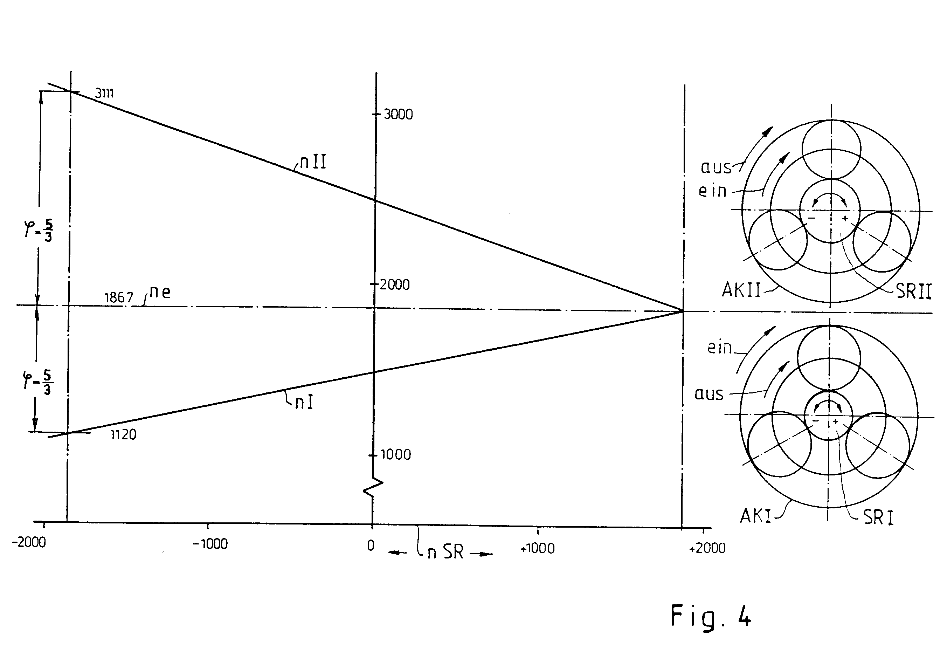

Bei den Verhältnissen im gegebenen Beispiel zeigt Fig. 4 den Drehzahlverlauf in den Umlaufgetrieben (I, II), wobei auf der Abszisse die Sonnenraddrehzahl (nSR) und auf der Ordinate die Planetensatzausgangsdrehzahlen (nI, nII) bei einer konstanten Eingangsdrehzahl Ne = 1867 U/Min. angegeben sind.

Die Standübersetzungen der Planetensätze I und II, d.h., die Drehzahlverhältnisse der Sonnenräder (SRI, SRII) zu den zugehörigen Außenrädern (ARI, ARII) sind mit minus 4,O und minus 3,O festgelegt, wodurch sich das Einzelstellverhältnis des Getriebes von 5/3 und die oben angegebenen hydrostatischen Leistungsanteile ergeben.

Die Übersetzungen der Gänge 1 und 2, sowie 3 und 4 sind jeweils gleich, und der Übergang vom 2. in den 3. Gang ist durch den Faktor entsprechend der zweiten Potenz des Einzelstellverhältnisses berücksichtigt. Analog hierzu liegt die Übersetzung im O. Gang um den Faktor des Einstellverhältnisses tiefer als die des 1. bzw. 2. Ganges.

Wie aus Tab. 1 und 2 sowie Fig. 2 ersichtlich, sind in der 8-Gang- und in der 4-Gang-Betriebsart im Stillstand, beim Anfahren und Reversieren im O. Gang jeweils 4 Kupplungen (KO, K1, K5, K6; KO, K1, K5, K7) eingeschaltet. Die Wendekupplungen (KV, KR) befinden sich im gesamten 0. Gang in ihrer Neutralstellung; dabei übertragen das Wendegetriebe und das Doppelplantengetriebe keine Leistung. Die gesamte Leistung wird in diesem Gang vollhydrostatisch übertragen. Deshalb ist die Güte des Anfahr- und Reversiervorganges der hohen Güte des Anfahrund Reversiervorganges einer selbstfahrenden Arbeitsmaschine, zum Beispiel Erntemaschine, mit einem hydrostatischen Fahrantrieb gleichzusetzen.

Da die Kupplung (K1) des ersten leistungsverzweigten Ganges bereits im Stillstand eingeschaltet ist, werden die nicht-leistungsführenden Komponenten einschließlich der der Wendekupplung (KR, KV)) mitgedreht, wodurch die Umschaltung in die leistungsverzweigte Antriebsart am Ende des Anfahrbereich des O. Ganges, nämlich am Ende des Stellbereichs des hydrostatischen Stellantriebes (HG), bei Drehzahlgleichheit an der Wendekupplung (KV, KR) auszuführen ist. Eine Synchronsisiervorrichtung ist an dieser Kupplung daher nicht erforderlich. Am Ende der Anfahrphase im 0. Gang wird dann, nach Einschalten der Wendekupplung (KV, KR) die Kupplung (K0) des 0. Ganges ausgerückt, womit der 1. Gang wirksam wird und der Übergang in die Leistungsverzweigung erfolgt.

Zum weiteren Hochschalten wird das hydrostatische Getriebe (HG) jeweils in die entgegengesetzte Extremlage durchgesteuert, und dann findet bei Drehzahlgleichheit an der Kupplung (K2) des 2. Ganges deren Einschaltung statt, wonach die Kupplung (K5) lastfrei auszuschalten ist. Die Kupplung (K1) des 1. Ganges ist in vorteilhafter Weise als Einzelkupplung ausgebildet und bleibt im Hinblick auf den Übergang in die schnelle Ganggruppe noch eingeschaltet. Entsprechend werden jeweils bei Drehzahlgleichheit an den Kupplungen (K3, K4) des 3. und 4. Ganges die Umschaltungen ausgeführt.

Beim Übergang in den 5. Gang läßt sich die Ganggruppen-Kupplung (K7) der schnellen Ganggruppe lastfei einschalten und danach die Kupplung (K6) der unteren Ganggruppe lastfrei ausschalten, da die Kupplung (K1) des 1. Ganges noch eingeschaltet ist und über die Hohlwelle (HW) die schnelle Gruppenstufe lastfrei antreibt. Da an diesen Kupplungen (K6, K7) der Ganggruppen beim Ein- und Auskuppeln jeweils Drehzahlgleichheit herrscht, sind auch dort keine Synchronisiervorrichtungen erforderlich.

Da die Last im 5. Gang über die Hohlwelle (HW) übertragen wird, ist die Zwischenwelle (ZW) lastfrei und kann durch die Kupplung (K5) des 5. Ganges vorbereitend auf die Umschaltung in den 6. Gang sychronisiert und eingeschaltet werden, wobei die Kupplung (K4) des 4. Ganges erst unmittelbar davor ausgeschaltet wurde. Der Gang 6 wird dadurch erreicht, daß wieder bei Drehzahlgleichheit, die Kupplung (K2) des 2. und 6. Ganges ein- und die Kupplung (K1) des 1. und 5. Ganges ausgeschaltet wird. Die Gänge 7 und 8 werden bei eingeschalteter Hilfskupplung (K5) jeweils durch die Schaltung der zugehörigen Kupplung (K3, K4) des 3. bzw. 7. und 4. bzw. 8. Ganges in den jeweiligen Endlagen des Verstellantriebes erreicht.

Das Herunterschalten geschieht generell in analoger Weise, wobei zur Vorbereitung des Gangwechsels vom 5. zum 4. Gang, also im Verlauf des 5. Ganges, die lastfreie Zwischenwelle (ZW) durch die Kupplung (K4) des 4. Ganges ansynchronisiert wird und die Kupplung (K5) des 5. Ganges jeweils erst kurz davor ausgeschaltet wird. Die Synchronisiervorgänge werden jeweils etwa in der Mittelstellung des Verstellantriebes eingeleitet.

In der elektronischen Steuerung des Getriebes sind vorteilhaft mehrere, durch einen Betriebsartenschalter (BAS), vorgebbare Bedienarten vorgesehen.

In einer ersten wählbaren Betriebsart wird über den Fahrhebel, dessen Stellung die Abtriebsdrehzahl vorgibt, ähnlich wie bei einem vollhydrostatisch angetriebenen Fahrzeug, die Schaltung bis zu einem entsprechenden Gang vollelektronisch durchgeführt. Die Motordrehzahl kann konstant vorgegeben oder unabhängig von der Getriebesteuerung frei gewählt sein. Diese Steuerung eignet sich besonders gut, wenn Nebenantriebe unabhängig vom Fahrantrieb eingesetzt sind.

In einer zweiten wählbaren Betriebsart ist das Getriebe in Abhängigkeit vom Betriebszustand des Antriebsmotors geregelt, und ein davon angetriebenes Fahrzeug ist nur mit Hilfe des Gaspedals, das mit der Steuervorrichtung über dem Stellungssensor in Verbindung steht, gesteuert zu fahren. Ein Gaspedal-Stellungs-Potentiometer liefert in Abhängigkeit von der Gaspedalstellung jeweils ein Sollsignal an die elektronische Steuereinheit.

Dieses jeweilige Sollsignal ist, gemäß zuvor festgelegten und in der Steuereinheit gespeicherten Kennlinien des Motorkennfeldes, einer bestimmten Solldrehzahl des Antriebsmotors zugeordnet, und es wird, ein Regelkreis bildend, mit dem Istsignal des Drehzahlsensors (S1) des Antriebsmotors verglichen, wobei das Differenzsignal vom Vergleicher als Vorgabesignal für die Getriebeeinstellung dient.

Es lassen sich beliebige parametrisierte Kennlinien des Motorkennfeldes, vorzugsweise diejenige eines minimalen Kraftstoffverbrauches, speichern und für die Solldrehzahlermittlung verwenden. Bei Abweichungen zwischen Soll- und Istsignal innerhalb vorgegebener Grenzwerte, die z.B. durch Zugkraftänderungen bedingt sein können, wird die Übersetzung des Getriebes durch Verstellung des hydrostatischen Stellgetriebes derart geändert, daß entsprechend der gewählten Kennlinie, Ist- und Sollsignal gleich werden. Diese Reglungsart ist sowohl im Teillastbereich, z.B. für kraftstoffminimiertes Fahren, als auch bei Vollast, z.B. für schwere Zugarbeiten zwecks ständiger und lastunabhängiger Ausnutzung der maximalen Motorleistung, vorteilhaft. Zur Vermeidung zu häufiger Kupplungsvorgänge ist eine Hystereseschwelle für die Getriebebereichsübergänge vorgesehen.

Eine dritte wählbare Betriebsart erbringt eine Konstantgeschwindigkeitsregelung, nämlich eine Regelung der Drehzahl der Getriebeabtriebswelle gemäß einer vom Fahrer mit Hilfe des Fahrhebels vorgebbaren Drehzahl und zwar weitgehend unabhängig von einer jeweiligen Getriebebelastung und der jeweils vom Antriebsmotor gegebenen Eingangsdrehzahl des Getriebes.

In einer vierten wählbaren Betriebsart wird statt einer Übersetzungsregelung des Getriebes auf ein beliebig vorgegebenes Übersetzungsverhältnis im gesamten möglichen Wandlungsbereich jeweils ein Regelbetrieb hin zur Mittelstellung des hydrostatischen Stellantriebes, also zum günstigsten Wirkungsgrad, bewirkt, und zwar derart, daß innerhalb eines jeweils durch den Fahrhebel vorgewählten Ganges eine automatische Übersetzungsänderung durch Verstellen der hydrostatischen Verstelleinheit in dessen Neutralstellung abläuft. Diese vierte Betriebsart wird vorteilhaft mit Hilfe eines am Fahrhebel (FH) angebrachten elektrischen Tasters vom Fahrer angewählt.

Die Geschwindigkeitsvorgabe des Fahrhebels wird bei einer Betätigung des Inch- und/oder Bremspedales übersteuernd herabgesetzt, so daß entsprechend der geringeren Vorgabegeschwindigkeit ein Herunterstellen und -schalten jeweils während einer Pedalbetätigung bis hin zum Stillstand erfolgt. Sind die Pedale wieder losgelassen, erfolgt die Vorgabe der Geschwindigkeit gemäß der Stellung des Fahrhebels und ein demgemäßes Schalten und Stellen durch die Steuervorrichtung.

Das Getriebe kann auch ohne das endseitige Differentialgetriebe verwandt werden, und es kann an der durch das Getriebe hindurchlaufende Antriebswelle ein Zapfwellengetriebe zweckmäßig vorgesehen sein.

Die bereits beschriebene vierte Betriebsart mit einer Getrieberegelung, die jeweils zur Mittelstellung des hydrostatischen Stellgetriebes in den einzelnen Gängen führt, ergibt die besten Getriebewirkungsgrade, weil die hydrostatische Nutzleistung in diesem Falle gleich Null ist. Die hydrostatische Verlustleistung ist jedoch nicht gleich Null, weil das stehende Sonnenrad ein Stüztmoment auf das hydrostatische Stellgetriebe abstützt, was zu einem entsprechenden Druck im hydrostatischen Kreislauf des Stellgetriebes führt. Die druckbedingten Leckölverluste des Stellgetriebes werden von der hydrostatischen Verstelleinheit aufgebracht und wirken somit in der Leistungsbilanz des Getriebes wirkungsgradmindernd.

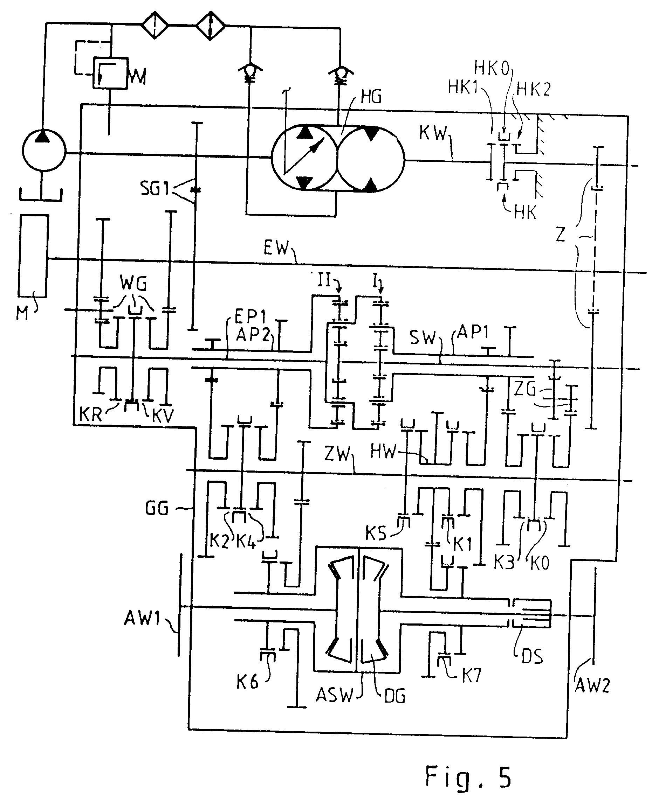

In einer weiteren vorteilhaften Ausgestaltung des Getriebes nach Fig. 5 wird dieser Nachteil durch Einführung einer weiteren Hilfskupplung (KH), die an der Ausgangswelle des hydrostatischen Stellgetriebes (HG) angeordnet ist, eliminiert. Diese Hilfskupplung (HK), die genau wie die anderen Kupplungen des Getriebes durch ein hydraulisches Stellglied und elektrohydraulische Schaltventile aktiviert wird und an die elektronische Steuereinheit (ST) angeschlossen ist, hat drei Schaltstellungen:

In einer Normalstellung (KH1) ist die Wirkverbindung zwischen dem Stellgetriebe (HG) und der Sonnenradwelle (SW) über die Zahnradstufe (Z) aufrechterhalten.

In einer zweiten Schaltstellung (HK2) ist die Wirkverbindung zwischen dem Stellgetriebe (HG) und der Sonnenradwelle (SW) unterbrochen, und zugleich ist die Sonnenradwelle (SW) über die Zahradstufe (Z) mit dem Getriebegehäuse (GG) verbunden und somit stillgesetzt.

In einer Mittelstellung (HKO) der Kupplung (HK) ist die Wirkverbindung zwischen dem Stellgetriebe (HG) und der Sonnenradwelle (SW) unterbrochen.

In der Schaltstellung (HK2) ist das zuvor beschriebene Abstützungsmoment der Sonnenräder bei stehender Sonnenradwelle (SW) direkt und verlustfrei vom Getriebegehäuse (GG) aufgenommen. Der Wirkungsgrad des Getriebes verbessert sich in diesem Betriebsbereich entsprechend durch die Einsparung der Leckölverlustleistung des Stellgetriebes; dieses ergibt je nach Betriebszustand, eine Verbesserung des Wirkungsgrades um 2-3%.

Die Hilfskupplung (HK) bietet darüberhinaus, in der Mittelstellung (HKO), die Möglichkeit die Wirkverbindung zwischen dem hydrostatischen Stellgetriebe (HG) und der Sonnenradwelle (SW) bei laufender Sonnenradwelle zu unterbrechen. Auch in dieser Schaltstellung ist das Getriebe in vorteilhafter Weise zu betreiben derart, daß bei den jeweiligen Gangschaltvorgängen nach dem Einschalten des neuen Ganges, statt eines Ausschaltens des alten Ganges, dieser vielmehr im Eingriff belassen wird und die Hilfskupplung (HK) in die Mittelstellung (HKO) geschaltet wird, wodurch das hydrostatische Getriebe (HG) abgekoppelt wird und der Leistungsfluß durch das Getriebe rein mechanisch ist, womit eine Verbesserung des Wirkungsgsrades eintritt.

Die elektronische Getriebesteuerung ist so ausgebildet, daß die Getriebeübersetzung auf die vierte Betriebsartwahl des Fahrers hin die oben beschriebenen speziellen, verlustarmen Betriebsweisen schaltet und automatisch die entsprechenden Drehzahlverhältnisse regelnd einstellt. Dabei wird vorteilhaft je nach der Stellung der hydrostatischen Verstelleinheit der jeweils nächstliegende verlustärmste Betriebspunkt, den die Hilfskupplungsmöglichkeit bietet, eingeregelt und die Hilfskupplung (HK) demgemäß gesteuert geschaltet. Auch in diesem Falle wird das Signal zur Ausführung dieses Kupplungs-Steuervorgangs mit Hilfe des am Fahrhebel angebrachten und zuvor beschriebenen elektrischen Tasters oder Schalters herbeigeführt.

Bei voller Ausnutzung der Schaltmöglichkeiten der Hilfskupplung (HK) ergibt sich somit ein 16-Gang-Getriebe mit stufenloser Übersetzungsänderung zwischen den Gängen. In den Übersetzungpunkten entsprechend den 16 Gängen fließt die Leistung rein mechanisch und verlustarm durch das Getriebe hindurch.

Ein weiterer vorteilhafter Anwendungsfall der Hilfskupplung (HK) ist die Schnelltrennung des Antriebsstranges in einem Notfall oder in automatischer Verbindung mit einem Vollbremsungsvorgang, insbesondere bei ansonsten blockierenden Rädern, wodurch die Gefahr eines Überdrehens des hydrostatischen Getriebes (HG) gebannt ist.

Die Hilfskupplung (HK) ist in vorteilhafter Weise als Lamellenkupplung ausgeführt, wodurch auch ein Schalten bei anstehendem Drehmoment möglich ist.

Eine vorteilhafte Steuerungsart des Getriebes, inbesondere bei Verwendung eines Dieselmotors, besteht darin, daß zur Vermeidung einer zu geringen Motordrehzahl beim Einwirken hoher Bremskräfte, insbesondere durch eine Betätigung der Betriebsbremse, im Bremszustand eine Solldrehzahl des Dieselmotors oberhalb der normal gewählten Leerlaufdrehzahl vorgegeben wird. Dieser gemäß wird dann die Getriebesteuerung durchgeführt bis der jeweils passende Gang eingeschaltet ist. Falls jedoch das Getriebe steuerungsbedingt die Gangsart nicht schnell genug wechseln kann und die Motordrehzahl unter die normale Leerlaufdrehzahl abfällt, werden die Gruppenkupplungen (K6, K7) gelöst gesteuert und der Gangwechsel des Getriebes bezogen auf die normale Leerlaufdrehzahl weitergeführt, bis synchrone Drehzahlen an den Gruppenkupplungen (K6, K7) vorliegen, worauf diese wieder eingeschaltet werden.

Weiterhin ist es vorteilhaft vorgesehen, die Getriebesteuerung derart vorzunehmen, daß auch bei einem Schubbetrieb die Motordrehzahl einen vorgegebenen Höchstwert nicht überschreitet.

Diese Getrieberegelungen bezüglich der Einhaltung der vorgegebenen höchsten und niedrigsten Motordrehzahlgrenzen ist den übrigen Regelkriterien, die abhängig von der Betriebsartwahl jeweils gegeben sind, übergeordnet. Eine weitere Ausgestaltung der Vorrichtung im Falle eines Stromausfalles der Steuerung besteht darin, daß die Gruppenkupplungen (K6, K7) und die Gangkupplungen (K1, K5) des ersten und fünften Ganges jeweils dadurch gelöst werden, daß die 2/3-Wegeventile (V1, V5, V6, V7), die diese ansteuern, so ausgestaltet sind, daß sie im stromlosen Zustand die Hydraulikdruckleitung mit den Ausrückzylindern verbinden.

Eine fünfte vorteilhafte Betriebsart ist durch die Anordnung des Wendegetriebes (WG) im mechanischen Leistungsverzweigungsteil des Getriebes ermöglicht. In ihr kann in jedem Gang vollhydrostatisch angefahren oder angehalten werden. Analog wie der hydrostatische Leistungsverzweigungsteil bei jedem Gangwechsel durch die Hilfskupplung (HK) abgekoppelt werden kann, so kann der mechanische Leistungsverzweigungsteil, ebenfalls bei jedem Gangwechsel durch das Wendegetriebe abgekoppelt werden, wodurch die Leistung rein vollhydrostatisch durch das Getriebe fließt, was in der fünften Betriebsart ausgenutzt wird.

Tabelle 5 zeigt die einzuhaltende Schaltlogik, wenn vollhydrostatisch in einem beliebigen Gang angefahren oder angehalten werden soll.

Diese fünfte Betriebsart wird dadurch verwirklicht, daß bei einer Gangvorwahl für das Anfahren, die Kupplung des Ganges, der vor dem gewünschten Anfahrgang liegt, zusätzlich zu der des gewählten Ganges eingeschaltet wird und dann das hydrostatische Getriebe bis zum richtigen Schaltpunkt in die leistungsverzweigte betriebsweise verstellt wird. In dem richtigen Schaltpunkt besteht eine Drehzahlgleichheit an der Klauenkupplung des Wendegetriebes, und es wird, wenn diese ermittelt wird, problemlos auf die dem Gang üblich zugeordnete Kupplungsschaltkonfiguration unter Einschaltung einer der Wendekupplungen ((KR, KV) umgeschaltet.

Analog hierzu wird bei einem vollhydraulischen Anhalten in einen beliebigen Gang, beim Herunterschalten im Gangwechselvorgang der üblicherweise auszuschaltenden Gang zusätzlich im Eingriff belassen und stattdessen die Wendegetriebekupplung in ihre Neutralstellung geschaltet. Danach kann das hydrostatische Getriebe in die Nullstellung verstellt werden, wodurch Stillstand erreicht wird.

Tab. 5

Vollhydrostatisches Anfahren/Anhalten vom 0. bis in den bezeichneten Gang

| Gang | KR,KV | K0 | K1 | K2 | K3 | K4 | K5 | K6 | K7 |
|------|-------|----|----|----|----|----|----|----|----|
| 1. | | X | X | | | | X | X | |
| 2. | | | X | X | | | X | X | |
| 3. | | | X | X | X | | X | | |
| 4. | | | X | | X | X | | X | |
| 5. | X | X | | | | | X | | X |
| 6. | | | X | X | | | X | | X |
| 7. | | | | X | X | | X | | X |
| 8. | | | | | X | X | X | | X |

Die Tabelle 5 gibt nur die Schaltkupplungskonfigurationen in den vollhydrostatischen Anfahr- bzw. Anhaltebereichen wieder. Das Umschalten in die leistungsverzweigten Fahrbereiche geschieht jeweils durch eine Einschaltung einer der Wendekupplungen (KV, KR) des Wendegetriebes bei Drehzahlgleichheit an der Kupplung und einer anschließenden Ausschaltung der Kupplung, die dem davorliegenden Gang zugeordnet ist. Danach können die nachfolgenden leistungsverzweigten Gänge nach den Regeln der Tabelle 1 oder 2 durchfahren werden.

Beispiel: Anfahren im 7. Gang:
- Kupplungen K2, K3, K5, K7 einschalten,
- Hydrostastik verstellen von 0 bis max.
- Wendekupplung KV oder KR einschalten, Kupplung K2 ausschalten.

In diesem Augenblick ist der 7. leistungsverzweigte Gang eingeschaltet. Die Möglichkeit eines vollhydrostatischen Anfahrens und Anhaltens in jedem Gang erbringt eine erhöhte steuerungstechnische Flexibilität.

In der elektronischen Getriebesteuerung ist z.B. der Gruppenwahlschalter (GW1) um weitere Anfahrgänge erweitert, wodurch eine entsprechende fünfte Betriebsart gewählt werden kann. Weiterhin kann es vorgegeben sein, daß automatisch ab einer bestimmten Stärke eines Bremsvorganges infolge einer Betätigung des Fahrhebels oder der Betriebsbremse ein Umschalten auf die fünfte Betriebsart, nämlich die vollhydrostatische Bremsung jeweils eingeleitet wird, wodurch viele Schaltvorgänge und das Durchfahren vieler Gänge vermieden werden und ein schnelleres Abbremsen erfolgt.

**Patentansprüche**

1. Stufenloses Lastschaltgetriebe mit einer hydrostatischmechanischen Leistungsverzweigung durch ein hydrostatisches Verstellgetriebe (HG), ein vierwelliges Doppelplanetengetriebe (I, II) und nachgeschaltete Ganggetriebe, wobei eine Eingangswelle (EW) über ein erstes Stirnradgetriebe (SG1) in permanenter Wirkverbindung mit dem Stellgetriebe (HG) steht und mit einer Stegwelle (EP1) des zweiten der Planetengetriebe (II) und dem Außenrad (AKI) des ersten der Planetengetriebe (I) gesteuert kuppelbar ist, und eine Ausgangswelle (KW) des hydrostatischen Stellgetriebes (HG) über eine Zahnradstufe (Z) mit einer Sonnenradwelle (SW), auf der die beiden Sonnenräder (SRI, SRII) der Planetengetriebe (I, II) angeordnet sind, verbunden ist und eine Stegwelle (AP1) des ersten Planetengetriebes (I) über ein erstes Ganggetriebe und eine zugehörige Schaltkupplung (K3) eines 3. Ganges mit einer ersten Zwischenwelle (ZW) gesteuert verbindbar ist sowie eine Außenradwelle (AP2) des zweiten Planetengetriebes (II) über weitere Ganggetriebe und zugehörige Schaltkupplungen (K2, K4) eines 2. und eines 4. Ganges mit der Zwischenwelle (ZW) gesteuert kuppelbar sind, und eine Getriebeausgangswelle (ASW) über ein erstes Gruppengetriebe und eine zugehörige erste Gruppenschaltkupplung (K6) mit der Zwischenwelle (ZW) verbindbar ist, und die Getriebeausgangswelle (ASW) über ein zweites Gruppengetriebe und eine zugehörige zweite Gruppenschaltkupplung (K7) mit einer zweiten Zwischenwelle (HW) verbindbar ist, die mittels einer Schaltkupplung (K5) eines 5. Ganges mit der ersten Zwischenwelle (ZW) gesteuert verbindbar ist, dadurch gekennzeichnet, daß

   - die zweite Zwischenwelle (HW) über ein Getriebe eines 1. Ganges mit einer getrennt steuerbaren Kupplung (K1) zur Stegwelle (AP1) verbindbar ist,
   - daß die Eingangswelle (EW) über ein einschaltbares Wendegetriebe (WG) mit der Stegwelle (EP1) verbindbar ist,
   - daß ein mit der Sonnenradwelle (SW) in einer Wirkverbindung stehendes Zwischengetriebe (ZG) über eine getrennt steuerbare Schaltkupplung (K0) zum Anfahren mit der Zwischenwelle (ZW) gesteuert kuppelbar ist, und
   - daß lediglich die Schaltkupplungen (K4, K5) des 4. und des 5. Ganges Synchronisierungseinrichtungen besitzen und sämtliche sonstigen Wendegetriebe-, Ganggetriebe- und Gruppengetriebe-Schaltkupplungen (KV, KR, K0, K1, K2, K3, K6, K7) als einfache Klauenkupplungen ausgebildet sind, und
   - daß durch eine Steuervorrichtung (ST) abhängig von Signalen von Bedienelementen (FH, GP, GH), wenn ein Verlassen des Stillstandes der Ausgangswelle (ASW) vorgegeben ist, die Kupplung des O. Ganges, des 1. und des 5. Ganges (K0, K1, K5) eingeschaltet sind und abhängig von der Stellung eines Gruppenwahlschalters (GW) eine der Gruppengetriebekupplungen (K6, K7) eingeschaltet ist und eine Verstellung des Wandlers (HG) vorgabegemäß gesteuert erfolgt und ein Übergang in einen hydrostatisch-mechanisch leistungsverzweigten Betriebszustand jeweils bei einer Drehzahlgleichheit zwischen den zu schaltenden Kupplungselementen des Wendegetriebes (WG), abhängig von dem Stellungssignal eines Vor-Rückwärtswählers, durch ein Einschalten der Vorwärtskupplung (KV) oder der Rückwärtskupplung (KR) eingestellt wird und daß im Falle, daß die Kupplung (K6) der unteren Getriebegruppenschaltung bestätigt ist, die Einzelkupplung des 1. Ganges bis zu einem Übergang in den 6. Gang eingeschaltet gehalten ist.

2. Stufenloses Lastschaltgetriebe nach Anspruch 1, dadurch gekennzeichnet, daß die zweite Zwischenwelle eine Hohlwelle (HW) ist, die auf der ersten Zwichenwelle (ZW) gelagert ist und sämtliche Schaltkupplungen (K0 - K5) des Zwischengetriebes (ZG) und der Ganggetriebe um die Zwischenwelle (ZW) angeordnet sind.

3. Stufenloses Lastschaltgetriebe nach einem der Ansprüche 1 oder 2, dadurch gekennzeichnet, daß das hydrostatische Stellgetriebe elektro-hydraulisch steuerbar ist, daß sämtliche Kupplungen (KV, KR, K0 - K7) durch hydraulische Stellglieder über elektrisch steuerbare hydraulische Ventile (VV, VR, V1 - V7) steuerbar sind, und daß die programmgesteuerte elektronische Steuervorrichtung (ST) ausgangsseitig die Ventile (VV, VR, V1 - V7) und das hydrostatische Stellgetriebe (HG) steuert und die Steuervorrichtung (ST) eingangsseitig mit Bedienelementen (GH, GP, FH, VRW, GW1, BAS, IP, BP), mit beidseitig des Verstellgetriebes (HG) und an der Ausgangswelle (ASW) angeordneten Drehzahlsensoren (S1, S2, SA) und mit Stellungssensoren der einzelenen Schaltkupplungen (KV, KR, K0 - K7) verbunden ist und ein Durchfahren eines Ganges jeweils durch ein Verstellen des hydrostatischen Stellgetriebes (HG) von einer Extremeinstellung in eine solche entgegengesetzte Extremeinstellung bewirkt wird, bei der durch die Drehzahlsensorsignale der Drehzahlsensoren (S1, S2, SA) eine Drehzahlgleichheit zwischen den jeweils zu schaltenden Kupplungselementen der Kupplungen eines anschließend ein- oder auszuschaltenden Ganges signalisiert ist.

4. Stufenloses Lastschaltgetriebe nach einem der Ansprüche 1 bis 3, dadurch gekennzeichnet, daß von der Steuervorrichtung (ST) jeweils während eines Durchfahrens des 5. Ganges, durch die Synchronkupplungen (K4, K5) eine vorbereitende Synchronisierung der Zwischenwelle (ZW) lastfrei stattfindet, wobei beim Hochschalten die Kupplung (K5) des 5. Ganges und beim Herunterschalten die Kupplung (K4) des 4. Ganges Synchronisierungsarbeit leistet, indem die im 5. Gang jeweils nicht leistungsführende Kupplung (K4, K5) des jeweils davorliegenden 4. oder 6. Ganges jeweils erst ausgeschaltet wird und danach kurz die zugehörige Synchronkupplung (K5, K4) eingeschaltet wird.

5. Stufenloses Lastschaltgetriebe nach einem der vorstehenden Ansprüche, dadurch gekennzeichnet, daß die Standübersetzung des ersten Planetensatzes (I) minus 4,O ist und die des zweiten Planetensatzes (II) minus 3,O beträgt.

6. Stufenloses Lastschaltgetriebe nach Anspruch 1 bis 5, dadurch gekennzeichnet, daß es in einem Fahrzeug antriebsmäßig eingebaut ist und dessen Radantrieb so ausgelegt ist, daß die Fahrgeschwindigkeiten jeweils in den Extremlagen des hydrostatischen Stellgetriebes (HG) für den Anfahrbereich O,84 und für die 8 Gänge 1,39; 2,32; 3,87; 6,45; 10,75; 17,9; 29,9 und 49,8 km/h bei einer konstant vorgegeben geregelten Motordrehzahl sind.

7. Stufenloses Lastschaltgetriebe nach einem der vorstehenden Ansprüche, dadurch gekennzeichnet, daß die Ausgangswelle (ASW) die Summenwelle eines Differentialgetriebes (DG) ist, dessen Abtriebswellen (AW1, AW2) mit Antriebsrädern eines Fahrzeuges verbunden sind.

8. Stufenloses Lastschaltgetriebe nach Anspruch 7, dadurch gekennzeichnet, daß das Differentialgetriebe (DG) eine steuerbare Differentialsperre aufweist.

9. Stufenloses Lastschaltgetriebe nach einem der vorstehenden Ansprüche, dadurch gekennzeichnet, daß die Steuervorrichtung (ST) abhängig von der Stellung eines Betriebsartenschalters (BAS) einen Regelkreis bildend die Getriebeübersetzung steuert,
   - wobei in einer ersten Betriebsartenstellung ein Soll-Signal von einem Stellungsgeber eines Fahrhebels (FH) und ein Ist-Signal der jeweiligen Getriebeübersetzung aus dem jeweiligen Verhältnis des Ausgangsdrehzahlsignales (SA) zum Eingangsdrehzahlsignal (S1) gegeben ist und
   - wobei in einer zweiten Betriebsartenstellung ein Soll-Signal von einem Stellungsgeber eines Gaspedals (GP) in Verbindung mit einem demgemäß ermittelten in einem Motorkennfeld vorgegebenen Betriebspunkt eines minimalen Kraftstoffverbrauches gebildet wird und ein Ist-Signal der jeweiligen Getriebeübersetzung aus dem jeweiligen Verhältnis der Ausgangsdrehzahl (SA) zur Eingangsdrehzahl (S1) gegeben ist und
   - wobei in einer dritten Betriebsartenstellung eine vorgegebene Motordrehzahl maximaler Motorleistung als ein Soll-Signal dient und die Eingangsdrehzahl (S1) als ein Ist-Signal dient und,
   - wobei in einer vierten Betriebsartenstellung ein Soll-Signal durch den Stellungsgeber des Fahrhebels (FH) oder des Gaspedals (GP) gegeben ist und das Ausgangsdrehzahlsignal (SA) als ein Ist-Signal dient.

10. Stufenloses Lastschaltgetriebe nach Anspruch 9, dadurch gekennzeichnet, daß abhängig von einer Stellung eines einstellbaren Signalgebers die Getriebeübersetzung, jeweils wenn eine Soll-Ist-Signaldifferenz auftritt, die einer Lage innerhalb eines Gangbereiches entspricht, das hydrostatische Getriebe (HG) jeweils in eine Neutralstellung gesteuert wird.

11. Stufenloses Lastschaltgetriebe nach Anspruch 10, dadurch gekennzeichnet, daß der Signalgeber für die Neutralstellung des hydrostatischen Getriebes (HG) ein am Fahrhebel angebrachter elektrischer Taster ist.

12. Stufenloses Lastschaltgetriebe nach einem der Ansprüche 10 oder 11, dadurch gekennzeichnet, daß an der Ausgangswelle (KW) des hydrostatischen Stellgetriebes (HG) eine Hilfskupplung (HK) angeordnet ist, die von der Steuervorrichtung (ST) steuerbar ist und die in einer Normalstellung (HK1) die Wirkverbindung der genannten Ausgangswelle über eine Zahnradstufe (Z) zu der Sonnenradwelle (SW) herstellt oder die in einer anderen Schaltstellung (HK2) die Sonnenradwelle (SW) über die Zahnradstufe (Z) mit dem Getriebegehäuse (GG) stillsetzend verbindet oder die, in eine Mittelstellung (HKO) verbracht, die genannte Ausgangswelle und die Sonnenradtwelle (SW) unverbunden und freidrehend läßt.

13. Stufenloses Lastschaltgetriebe nach Anspruch 12, dadurch gekennzeichnet, daß die Steuervorrichtung (ST) in einer der vorgebbaren Betriebsarten jeweils bei einer vorgegebenen Einstellung eines Gangbereiches die Hilfskupplung (HK) in die Normalstellung (HK1) verbracht ist und das Stellgetriebe (HG) in seine Neutralstellung gestellt wird und dann die Hilfskupplung (HK) in die andere, die Sonnenradwelle (SW) stillsetzende, Schaltstellung (HK2) geschaltet wird.

14. Stufenloses Lastschaltgetriebe nach Anspruch 12 oder 13, dadurch gekennzeichnet, daß die Steuervorrichtung (ST) abhängig von einem vorgebbaren Steuersignal zu einer Gangumschaltung das hydrostatishe Stellgetriebe (HG) in seine jeweils nächstliegende Extremlage steuert und dann die Kupplung des nächsten Ganges einschaltet, wobei die Kupplung des vorherigen Ganges verbunden gesteuert bleibt, und danach die Hilfskupplung (HK) in die Mittelstellung (HKO) verbringt.

15. Stufenloses Lastschaltgetriebe nach einem der Ansprüche 12 bis 14, dadurch gekennzeichnet, daß die Steuervorrichtung (ST) abhängig von einem vorgebbaren Betriebsartensignal in jedem vorgegebenen Gangbereich und abhängig von einer jeweiligen Regelabweichung des Ist-Signales entsprechend einer jeweils geringeren Regelabweichung das hydrostatische Stellgetriebe (HG)
   - entweder in dessen Neutralstellung steuert während die Hilfskupplung (HK) in ihre Normalstellung (HK1) gestellt ist und dann die Hilfskupplung (HK) in die, die Sonnenradwelle (SW) stillsetzende, Schaltstellung (HK2) schaltet
   - oder die Hilfskupplung (HK) in ihre Normalstellung (HK1) steuert und dann das Stellgetriebe (HG) in dessen Extremlage steuert und in dieser die Hilfskupplung (HK) in die Mittelstellung (HKO) steuert.

16. Stufenloses Lastschaltgetriebe nach einem der Ansprüche 12 bis 14, dadurch gekennzeichnet, daß die Steuervorrichtung (ST) abhängig von einem vorgebbaren Steuersignal, das eine Vollbremsung oder einen Notzustand signalisiert, die Hilfskupplung (HK) in die Mittelstellung (HK0) steuert.

17. Stufenloses Lastschaltgetriebe nach einem der Ansprüche 9 bis 16, dadurch gekennzeichnet, daß die Steuervorrichtung (ST) bei Vorliegen eines Betätigungssignals eines Bremspedals (BP) das Eingangsdrehzahlsignal des Drehzahlsensors (S1) mit einem ersten Vergleichssignal, das einer gegenüber einer gegebenen Motor-Leerlaufdrehzahl erhöht vorgegebenen Solldrehzahl entspricht, ständig vergleicht und gemäß einer jeweiligen Abweichung davon die diese vermindernd erforderliche Gangfolge durchschaltet, und die Steuervorrichtung (ST) das Eingangsdrehzahlsignal ständig mit einem vorgegebenen Motor-Leerlaufdrehzahlsignal vergleicht und dann, wenn dieses unterschritten ist, die Gruppenkupplungen (K6, K7) über die Ventile (V6, V7) entkoppelnd steuert und danach durch einen der Gangstufe entsprechenden Vergleich der Eingangsdrehzahlmeßsignale (S1, S2) mit dem Ausgangsdrehdzahlsignal (SA) ständig überprüft, ob eine synchrone Drehzahl an einer dieser Gruppenkupplungen (K6, K7) vorliegt und wenn dies der Fall ist, diese wieder eingeschaltet steuert.

18. Stufenloses Lastschaltgetriebe nach Anspruch 17, dadurch gekennzeichnet, daß die Steuervorrichtung (ST) das Eingangsdrehzahlsignal (S1) ständig mit einem vorgegebenen Höchstdrehzahlsignal vergleicht und dann, wenn dieses überschritten ist, das Getriebe in den jeweils höheren Gang schaltet.

19. Stufenloses Lastschaltgetriebe nach einem der vorstehenden Ansprüche, dadurch gekennzeichnet, daß die Ventile (V1, V5, V6, V7) der Kupplungen (K1, K5) des ersten und fünften Ganges und der Gruppenkupplungen (K6, K7) derart ausgebildet und angeschlossen sind, daß jeweils im stromlosen Zustand diese Kupplungen (K1, K5, K6, K7) ausgerückt sind.

**20.** Stufenloses Lastschaltgetriebe nach einem der vorstehenden Ansprüche, dadurch gekennzeichnet, daß die Steuervorrichtung (ST) in einer vorgebbaren Betriebsart das Getriebe vollhydrostatisch nicht leistungsverzweigt einstellt, indem sie jeweils die Getriebekupplungen (K0, K1, K5; K1, K2, K5; K1, K2, K3; K1, K3, K4) eines vor einem vorgegebenen Gang liegenden Ganges und die des gewählten Ganges und eine der Gruppengetriebekupplungen (K6, K7) gleichzeitig eingeschaltet steuert und die Wendegetriebekupplungen (KR, KV) in die Neutralstellung verbingt bis signalisiert ist, daß das Stellgetriebe (HG) in eine der Extremstellungen verbracht ist und an einer der Wendegetriebekupplung (KV, KR) Drehzahlgleichheit vorliegt, worauf sie diese eingeschaltet steuert und den jeweils nicht vorgegebenen Gang der beiden Gänge ausgeschaltet steuert, wodurch ein Übergang aus dem oder in den leistungsverzweigten Betrieb jeweils vom oder zum oberen der geschalteten beiden Ganggetriebe erfolgt.

**21.** Stufenloses Lastschaltgetriebe nach Anspruch 20, dadurch gekennzeichnet, daß der Steuervorrichtung (ST) die vollhydrostatische Betriebsart dann automatisch vorgegeben ist, wenn der Steuervorrichtung (ST) eine Abbremsung durch eine Verstellung des Fahrhebels (FH) oder eine Betätigung der Betriebsbremse (BP) signalisiert wird, die einen vorgegebene Bremsungsgrenzwert überschreitet.

**22.** Stufenloses Lastschaltgetriebe mit einer hydrostatischmechanischen Leistungsverzweigung durch ein hydrostatisches Verstellgetriebe (HG), ein vierwelliges Doppelplanetengetriebe (I, II) und nachgeschaltete Ganggetriebe, wobei eine Eingangswelle (EW) über ein erstes Stirnradgetriebe (SG1) in permanenter Wirkverbindung mit dem Stellgetriebe (HG) steht und mit einer Stegwelle (EP1) des zweiten der Planetengetriebe (II) und dem Außenrad (AKI) des ersten der Planetengetriebe (I) gesteuert kuppelbar ist, und eine Ausgangswelle (KW) des hydrostatischen Stellgetriebes (HG) über eine Zahnradstufe (Z) mit einer Sonnenradwelle (SW), auf der die beiden Sonnenräder (SRI, SRII) der Planetengetriebe (I, II) angeordnet sind, verbunden ist und eine Stegwelle (AP1) des ersten Planetengetriebes (I) über ein erstes Ganggetriebe und eine zugehörige Schaltkupplung (K3) eines 3. Ganges mit einer ersten Zwischenwelle (ZW) gesteuert verbindbar ist sowie eine Außenradwelle (AP2) des zweiten Planetengetriebes (II) über weitere Ganggetriebe und zugehörige Schaltkupplungen (K2, K4) eines 2. und eines 4. Ganges mit der Zwischenwelle (ZW) gesteuert kuppelbar sind, und eine Getriebeausgangswelle (ASW) mit der Zwischenwelle (ZW) verbindbar ist, dadurch gekennzeichnet, daß
- die Zwischenwelle (ZW) über ein Getriebe eines 1. Ganges mit einer steuerbaren Kupplung (K1) und ggf. mit einer steuerbaren Kupplung (K5) eines fünften Ganges zur Stegwelle (AP1) verbindbar ist,
- daß die Eingangswelle (EW) über ein einschaltbares Wendegetriebe (WG) mit der Stegwelle (EP1) verbindbar ist,
- daß ein mit der Sonnenradwelle (SW) in einer Wirkverbindung stehendes Zwischengetriebe (ZG) über eine getrennt steuerbare Schaltkupplung (KO) mit der Zwischenwelle (ZW) gesteuert kuppelbar ist, und daß eine Steuervorrichtung (ST) in einer vorgebbaren Betriebsart das Getriebe vollhydrostatisch nicht leistungsverzweigt einstellt, indem sie jeweils die Getriebekupplungen (K0, K1, K5; K1, K2, K5; K1, K2, K3; K1, K3, K4) eines vor einem vorgegebenen Gang liegenden Ganges und die des gewählten Ganges gleichzeitig eingeschaltet steuert und die Wendegetriebekupplungen (KR, KV) in die Neutralstellung bringt, bis signalisiert ist, daß das Stellgetriebe (HG) in eine der Extremstellungen verbracht ist und an einer der Wendegetriebekupplung (KV, KR) Drehzahlgleichheit vorliegt, worauf sie diese eingeschaltet steuert und den jeweils nicht vorgegebenen Gang der beiden Gänge ausgeschaltet steuert, wodurch ein Übergang aus dem oder in den leistungsverzweigten Betrieb jeweils vom oder zum oberen der geschalteten beiden Ganggetriebe erfolgt.

**23.** Stufenloses Lastschaltgetriebe nach Anspruch 22, dadurch gekennzeichnet, daß der Steuervorrichtung (ST) die vollhydrostatische Betriebsart dann automatisch vorgegeben ist, wenn der Steuervorrichtung (ST) eine Abbremsung durch eine Verstellung eines Fahrhebels (FH) oder eine Betätigung einer Betriebsbremse (BP) signalisiert wird, die einen vorgegebene Bremsungsgrenzwert überschreitet.

## Claims

**1.** Infinitely variable power-shift transmission with a hydrostatic-mechanical power split through a hydrostatic adjusting gearbox (HG), a four-shaft double planetary gearbox (I, II) and downstream speed gearboxes, an input shaft (EW) being permanently operatively connected via a first spur gear train (SG1) to the adjusting gearbox (HG) and being adapted to be coupled in controlled manner to a web shaft (EP1) on the second of the planetary gearboxes (II) and to the outer wheel (AKI) on the first of the planetary gearboxes (I), and an output shaft (KW) on the hydrostatic adjusting gearbox (HG) being connected via a gear stage (Z) to a sun wheel shaft (SW) on which the two sun wheels (SRI, SRII) of the planetary gearboxes (I, II) are arranged, and a web shaft (AP1) on the first planetary gearbox (I) being adapted to be connected in controlled manner via a first speed gearbox and an associated third-gear shifting clutch (K3) to a first intermediate shaft (ZW), and an outer wheel shaft (AP2) on the second planetary gearbox (II) being adapted to be coupled in controlled manner to the intermediate shaft (ZW) via additional speed gearboxes and associated second-gear and fourth-gear shifting clutches (K2, K4), and a transmission output shaft (ASW) being adapted to be connected to the intermediate shaft (ZW) via a first range-change gearbox and an associated first range-shifting clutch (K6), and the transmission output shaft (AWS) being adapted to be connected via a second range-change gearbox and an asociated second range-shifting clutch (K7) to a second intermediate shaft (HW) which is adapted to be connected in controlled manner to the first intermediate shaft (ZW) by means of a fifth-gear shifting clutch (K5),
characterised in that
- the second intermediate shaft (HW) is adapted to be connected to the web shaft (AP1) via a first gear transmission with a separately controllable clutch (K1),
- the input shaft (EW) is adapted to be connected to the web shaft (EP1) via an engageable reversing gearbox (WG),
- an intermediate gearbox (ZG) operatively connected to the sun wheel shaft (SW) is adapted to be coupled in controlled manner to the intermediate shaft (ZW) via a separately controllable drive-away shifting clutch (K0), and
- only the fourth-gear and fifth-gear shifting clutches (K4, K5) possess synchronisation devices and all other reversing gearbox clutches, speed gearbox clutches and range-change shifting clutches (KV, KR, K0, K1, K2, K3, K6, K7) are simple dog clutches, and
- dependent on signals from controls (FH, GP, GH) a control unit (ST) causes the neutral-gear, first-gear and fifth-gear clutch (K0, K1, K5) to be engaged if the output shaft (ASW) is programmed to quit its stationary position, and dependent on the position of a range selector switch (GW) one of the range-change clutches (K6, K7) is engaged, and the converter (HG) is adjusted in controlled manner as programmed, and a changeover into a hydrostatic-mechanical power-split operating condition takes place whenever there is synchronisation of the speeds of the clutch elements of the reversing gear train (WG) that are to be shifted, dependent on the position signal from a forward/reverse selector, by engagement of the forward clutch (KV) or of the reverse clutch (KR), and in the event that the clutch (K6) of the lower transmission range shift is actuated, the single first-gear clutch is kept engaged until a changeover into sixth gear has taken place.

2. Infinitely variable power-shift transmission according to claim 1, characterised in that the second intermediate shaft is a hollow shaft (HW) mounted on the first intermediate shaft (ZW), and all the clutches (K0 - K5) of the intermediate transmission (ZG) and of the speed gearboxes are arranged around the intermediate shaft (ZW).

3. Infinitely variable power-shift transmission according either of claims 1 and 2, characterised in that the hydrostatic adjusting gearbox can be controlled electrohydraulically, that all the clutches (KV, KR, K0 - K7) can be controlled by hydraulic actuators via electrically controllable hydraulic valves (VV, VR, V1 - V7), and that the program-controlled electronic control unit (ST) controls the valves (VV, VR, V1 - V7), and that the program-controlled electronic control unit (ST) controls the valves (VV, VR, V1 - V7) and the hydrostatic adjusting gearbox (HG) at the output side, and on the input side the control unit (ST) is connected to controls (GH, GP, FH, VRW, GW1, BAS, IP, BP), to speed sensors (S1, S2, SA) arranged on both sides of the adjusting gearbox (HG) and on the output shaft (ASW), and to position sensors for the various shifting clutches (KV, KR, K0 - K7), and moving through a gear is in each case effected by an adjustment of the hydrostatic adjusting gearbox (HG) from one extreme setting into an opposing extreme setting in which the speed sensing signals from the speed sensors (S1, S2, SA) signal synchronisation of the speeds of the respective clutch elements to be shifted in respect of a gear to be engaged or disengaged next.

4. Infinitely variable power-shift transmission according to any of claims 1 to 3, characterised in that from the control unit (ST), whenever moving through fifth gear, the synchronising clutches (K4, K5) effect a power-free preparatory synchronisation of the intermediate shaft (ZW), whereby the fifth-gear clutch (K5) does synchronisation work during shifting-up and the fourth-gear clutch (K4) does synchronisation work during shifting-down, by virtue of whichever clutch (K4, K5) of the respective fourth or sixth gear preceding it not conveying the power in fifth gear being first of all disengaged and thereafter the associated synchronising clutch (K5, K4) briefly engaged.

5. Infinitely variable power-shift transmission according to any of the preceding claims, characterised in that the gear ratio of the first planetary gear set (I) is minus 4.0 and that of the second planetary gear set (II) is minus 3.0.

6. Infinitely variable power-shift transmission according to claims 1 to 5, characterised in that it is installed propulsively in a vehicle and the wheel drive thereof is so designed that the travelling speeds in the extreme positions of the hydrostatic adjusting gearbox (HG) are respectively 0.84 for the drive-away range and for the eight gears 1.39; 2.32; 3.87; 6.45; 10.75; 17.9; 29.9 and 49.8 km/h at a constantly programmed, controlled engine speed.

7. Infinitely variable power-shift transmission according to one of the preceding claims, characterised in that the output shaft (ASW) is the total shaft of a differential gearbox (DG) whose driven shafts (AW1, AW2) are connected to driving wheels of a vehicle.

8. Infinitely variable power-shift transmission according to claim 7, characterised in that the differential gearbox (DG) has a controllable differential lock.

9. Infinitely variable power-shift transmission according to any of the preceding claims, characterised in that the control unit (ST) controls the transmission ratios depending on the position of an operating mode switch (BAS), forming a closed control loop, whereby
   - in a first operating mode setting, a position sensor in respect of a hand throttle (FH) and an actual signal in respect of the current transmission ratio provide a setpoint signal from the respective ratio of the output speed signal (SA) to the input speed signal (S1) and
   - in a second operating mode setting, a position sensor in respect of an accelerator pedal (GP) forms a setpoint signal in conjunction with a preset minimum fuel consumption operating point accordingly determined in a map of the engine and an actual signal is provided in respect of the current transmission ratio from the respective ratio of the output speed (SA) to the input speed (S1), and
   - in a third operating mode setting, a programmed engine speed reflecting maximum engine performance serves as a setpoint signal and the input speed (S1) serves as an actual signal, and
   - in a fourth operating mode setting, a setpoint signal is provided by the position sensor of the hand throttle (FH) or of the accelerator pedal (GP) and the output speed signal (SA) serves as an actual signal.

10. Infinitely variable power-shift transmission according to claim 9, characterised in that dependent on a position of an adjustable signal sensor, whenever a setpoint/actual signal differential occurs that corresponds to a position within the gear range, the hydrostatic transmission (HG) is in each case adjusted to a neutral setting.

11. Infinitely variable power-shift transmission according to claim 10, characterised in that the signal sensor for the neutral setting of the hydrostatic transmission (HG) is an electrical momentary-contact switch mounted on the hand throttle.

12. Infinitely variable power-shift transmission according to either of claims 10 and 11, characterised in that on the output shaft (KW) of the hydrostatic adjusting transmission (HG) is arranged an auxiliary clutch (HK) adapted to be controlled by the control unit (ST) and which in a normal position (HK1) operatively connects said output shaft via a gear stage (Z) to the sun wheel shaft (SW) or in another shift position (HK2) connects the sun wheel shaft (SW) via the gear stage (Z) to the gear case (GG) so as to arrest said sun wheel shaft (SW), or which, moved into a midway position (HKO), leaves said output shaft and the sun wheel shaft (SW) disconnected and rotating freely.

13. Infinitely variable power-shift transmission according to claim 12, characterised in that the control unit (ST) in one of the programmable operating modes, in each case with a preset speed-range adjustment, moves the auxiliary clutch (HK) into the normal position (HK1) and puts the adjusting transmission (HG) into its neutral position, and then the auxiliary clutch (HK) is shifted into the other shift position (HK2), arresting the sun wheel shaft (SW).

14. Infinitely variable power-shift transmission according to claim 12 or 13, characterised in that the control unit (ST), dependent on a programmable control signal in respect of gear-speed changeover, moves the hydrostatic adjusting transmission (HG) into whichever extreme position is closest and then engages the clutch of the following gear, the clutch of the previous gear remaining connected in controlled manner, and thereafter moves the auxiliary clutch (HK) into the midway position (HKO).

15. Infinitely variable power-shift transmission according to any of claims 12 to 14, characterised in that the control unit (ST), dependent on a programmable operating mode signal in each programmed gear-speed range and dependent on a respective deviation of the actual signal corresponding to a respective smaller deviation:
    - either causes the hydrostatic adjusting transmission (HG) to adopt its neutral position while the auxiliary clutch (HK) is set in its normal position (HK1) and then shifts the auxiliary clutch (HK) into the shift position (HK2), arresting the sun wheel shaft (SW),
    - or causes the auxiliary clutch (HK) to adopt its normal position (HK1) and then causes the adjusting transmission (HG) to adopt its extreme position and in the latter causes the auxiliary clutch (HK) to adopt the midway position (HKO).

16. Infinitely variable power-shift transmission according to any of claims 12 to 14, characterised in that the control unit (ST), dependent on a programmable control signal signalling drastic braking or an emergency situation, causes the auxiliary clutch (HK) to adopt the midway position (HKO).

17. Infinitely variable power-shift transmission according to any of claims 9 to 16, characterised in that if an actuation signal is present in respect of a brake pedal (BP), the control unit (ST) continually compares the input speed signal from the speed sensor (S1) with a first comparative signal corresponding to an increased programmed desired speed relative to a given engine idle speed, and in accordance with a respective deviation therefrom shifts through the necessary gear sequence so as to reduce said deviation, and the control unit (ST) continually compares the input speed signal with a programmed engine idle speed signal and, when said signal is not attained, causes the range-change clutches (K6, K7,) to become decoupled via the valves (V6, V7) and thereafter by comparing, matched to gear speed, the input speed measurement signals (S1, S2) with the output speed signal (SA), continually checks whether there is a synchronous speed at one of these range-change clutches (K6, K7) and if this proves to be the case causes the clutch concerned to become re-engaged.

18. Infinitely variable power-shift transmission according to claim 17, characterised in that the control unit (ST) continually compares the input speed signal (S1) with a programmed maximum speed signal, and when the latter is exceeded shifts the transmission into the respective higher gear ratio.

19. Infinitely variable power-shift transmission according to any of the preceding claims, characterised in that the valves (V1, V5, V6, V7) of the first-gear and fifth-gear clutches (K1, K5) and of the range-change clutches (K6, K7) are constructed and linked in such a manner that said clutches (K1, K5, K6, K7) are disconnected whenever off-circuit.

20. Infinitely variable power-shift transmission according to any of the preceding claims, characterised in that in a programmable operating mode the control unit (ST) adjusts the transmission fully hydrostatically and without a power split, by causing the respective transmission clutches (K0, K1, K5; K1, K2, K5; K1, K2, K3; K1, K3, K4) of a gear situated before a programmed gear and that of the selected gear and one of the range-change clutches (K6, K7) to be engaged simultaneously and moving the reversing gearbox clutches (KR, KV) into the neutral position until a signal arrives that the adjusting gearbox (HG) has been moved into one of the extreme settings and there is speed synchronisation at one of the reversing gearbox clutches (KV, KR), whereupon the control unit (ST) causes the latter clutch to be engaged and whichever of the two gears was not programmed to be disengaged, resulting in a changeover from or into the power-split mode of operation respectively from or to the higher of the two speed gearboxes engaged.

21. Infinitely variable power-shift transmission according to claim 20, characterised in that the control unit (ST) is automatically programmed for the fully hydrostatic operating mode when an adjustment of the hand throttle (FH) or actuation of the service brake (BP) signals to the control unit (ST) a braking action that exceeds a programmed braking limit coefficient.

22. Infinitely variable power-shift transmission with a hydrostatic-mechanical power split through a hydrostatic adjusting gearbox (HG), a four-shaft double planetary gearbox (I, II) and downstream speed gearboxes, an input shaft (EW) being permanently operatively connected via a first spur gear train (SG1) to the adjusting gearbox (HG) and being adapted to be coupled in controlled manner to a web shaft (EP1) on the second of the planetary gearboxes (II) and to the outer wheel (AKI) on the first of the planetary gearboxes (I), and an output shaft (KW) on the hydrostatic adjusting gearbox (HG) being connected via a gear stage (Z) to a sun wheel shaft (SW) on which the two sun wheels (SRI, SRII) of the planetary gearboxes (I, II) are arranged, and a web shaft (AP1) on the first planetary gearbox (I) being adapted to be connected in controlled manner via a first speed gearbox and an associated third-gear shifting clutch (K3) to a first intermediate shaft (ZW), and an outer wheel shaft (AP2) on the second planetary gearbox (II) being adapted to be coupled in controlled manner to the intermediate shaft (ZW) via additional speed gearboxes and associated second-gear and fourth-gear shifting clutches (K2, K4), and a gearbox output shaft (ASW) being adapted to be connected to the intermediate shaft (ZW),
characterised in that
- the intermediate shaft (ZW) is adapted to be connected to the web shaft (AP1) via first-gear transmission with a controllable clutch (K1) and if appropriate by a controllable fifth-gear clutch (K5),
- the input shaft (EW) is adapted to be connected to the web shaft (EP1) via an engageable reversing gearbox (WB),
- an intermediate gearbox (ZG) operatively connected to the sun wheel shaft (SW) is adapted to be coupled in controlled manner to the intermediate shaft (ZW) via a separately controllable shifting clutch (K0), and that in a programmable operating mode the control unit (ST) adjusts the transmission fully hydrostatically and without a power split, by causing the respective transmission clutches (K0, K1, K5; K1, K2, K5; K1, K2, K3; K1, K3, K4) of a gear situated before a programmed gear and that of the selected gear to be engaged simultaneously and moving the reversing gearbox clutches (KR, KV) into the neutral position until a signal arrives that the adjusting gearbox (HG) has been moved into one of the extreme settings and there is speed synchronisation at one of the reversing gearbox clutches (KV, KR), whereupon the control unit (ST) causes the latter clutch to be engaged and whichever of the two gears was not programmed to be disengaged, resulting in a changeover from or into the power-split mode of operation respectively from or to the higher of the two speed gearboxes engaged.

23. Infinitely variable power-shift transmission according to claim 22, characterised in that the control unit (ST) is automatically programmed for the fully hydrostatic operating mode when an adjustment of the hand throttle (FH) or actuation of a service brake (BP) signals to the control unit (ST) a braking action that exceeds a programmed braking limit coefficient.

**Revendications**

1. Transmission à réglage continu avec une division de puissance hydrostatico-mécanique par engrenage de réglage hydrostatique (HG), un double engrenage planétaire (I, II) à quatre arbres et une boîte de vitesse connectée en aval, un arbre d'entrée (EW) étant couplé opérationnellement en permanence avec l'engrenage de réglage (HG), par l'intermédiaire d'un premier engrenage droit (SG1), et pouvant être couplé, par commande, à un arbre EP1), qui relie par un pont les satellites du deuxième engrenage planétaire (II), et à la roue extérieure (AKI) du premier engrenage planétaire (I), et un arbre de sortie (KW) de l'engrenage de réglage hydrostatique (HG) étant relié, par l'intermédiaire d'un gradin de pignon (Z), à un arbre de roues solaires (SW), sur lequel les deux roues solaires (SRI, SRII) des engrenages planétaires (I, II) sont disposées, et un arbre (AP1), qui relie par un pont les satellites du premier engrenage planétaire (I), pouvant être couplé par commande avec un deuxième arbre intermédiaire (ZW), en passant par un engrenage de 1ère vitesse et un embrayage afférent (K3) d'une 3ème vitesse, alors qu'un arbre à roues extérieures (AP2) du deuxième engrenage planétaire (II) peut être couplé par commande avec l'arbre intermédiaire (ZW), en passant par d'autres boîtes de vitesses et des embrayages (K2, K4) afférents d'une 2ème et d'une 4ème vitesses, et un arbre de sortie de transmission (ASW) pouvant être couplé avec l'arbre intermédiaire (ZW) en passant par un premier engrenage en groupe et le premier embrayage afférent (K6), et l'arbre de sortie de transmission (ASW) pouvant être couplé, par l'intermédiaire d'un deuxième engrenage en groupe et d'un deuxième embrayage afférent (K7), avec un deuxième arbre intermédiaire (HW), qui peut être couplé par commande avec un embrayage (K5) d'une 5ème vitesse,
caractérisée en ce que
- le deuxième arbre intermédiaire (HW) peut être couplé, par l'intermédiaire d'un engrenage d'une 1ère vitesse, avec un embrayage à commande séparée (KI) conduisant à l'arbre à pont (AP1),
- l'arbre d'entrée (EW) peut être couplé avec l'arbre à pont (EP1) par l'intermédiaire d'un engrenage de renversement (WG) engageable,
- un engrenage intermédiaire, couplé opérationnellement avec l'arbre de roues solaires (SW), peut être couplé par commande, pour le démarrage, avec l'arbre intermédiaire (ZW) par l'intermédiaire de l'embrayage à commande séparée (K0).
- seuls les embrayages (K4, K5) de la 4ème et de la 5ème vitesses sont équipés de dispositifs de synchronisation et que tous les autres embrayages d'engrenage de renversement, boîtes de vitesse et engrenages en groupe (KV, KR, K0, K1, K2, K3, K6, K7) sont de simples accouplements à griffes et que
- selon des signaux d'éléments de commande (FH, GP, GH), une unité de commande (ST) provoque l'engagement des embrayages de la vitesse 0, de la 1ère vitesse et de la 5ème vitesse (K0, K1, K5) quand, en raison de la programmation, l'arbre de sortie (ASW) doit quitter la position stationnaire et que, en fonction de la position d'un commutateur sélectif (GW), l'un des accouplements d'engrenages en groupe (K6, K7) est connecté et qu'un ajustage du convertisseur (HG) a lieu par commande prédéterminée et qu'un passage à un état de division de puissance hydrostatico-mécanique a lieu, par connexion de l'embrayage avant (KV) ou de l'embrayage arrière, lors de la synchronisation de la vitesse des éléments à coupler de l'engrenage de renversement (WG), en fonction du signal de position d'un sélecteur avant/arrière, et que, si l'embrayage (K6) du changement de vitesse inférieur est confirmé, l'embrayage individuel de la première vitesse reste engagé jusqu'au passage à la 6ème vitesse.

2. Transmission à réglage continu selon la revendication 1, caractérisée en ce que
le deuxième arbre intermédiaire est un arbre creux (HW), qui est monté sur le premier arbre intermédiaire (ZW), et que tous les embrayages (K0 à K5) de la transmission intermédiaire (ZG) et des boîtes de vitesses sont disposés de part et d'autre de l'arbre intermédiaire (ZW).

3. Transmission à réglage continu selon la revendication 1 ou 2, caractérisée en ce que
l'engrenage de réglage hydrostatique peut être équipé d'une commande électrohydraulique, que tous les embrayages (KV, KR, K0 à K7) peuvent être commandés par des vérins hydrauliques, à l'aide de soupapes hydrauliques (VV, VR, V1 à V7) à commande électrique, et que l'unité de commande (ST) électronique, commandée par programme, commande, côté sortie, les soupapes (VV, VR, V1 à V7) et l'engrenage de réglage hydrostatique (HG) et est connectée, côté entrée, à des éléments de commande (GH, GP, FH, VRW, GW1, BAS, IP, BP) avec détecteurs de vitesse (S1, S2, SA), disposés des deux côtés de l'engrenage de réglage (HG) et sur l'arbre de sortie (ASW), et avec détecteurs de position des différents embrayages (KV, KR, K0 à K7), et qu'un passage du nombre de tours inférieur au nombre de tours supérieur d'une vitesse est provoqué par le réglage de l'engrenage hydrostatique (HG) d'une position extrême à une position extrême opposée, dans laquelle une synchronisation de vitesse entre les éléments des embrayages d'une vitesse suivante à embrayer ou débrayer est signalée par les signaux des détecteurs de vitesse (S1, S2, SA).

4. Transmission à réglage continu selon l'une des revendications 1 à 3, caractérisée en ce que,
pendant le passage du nombre de tours inférieur au nombre de tours supérieur de la 5ème vitesse, à partir de l'unité de commande (ST), une synchronisation préliminaire de l'arbre intermédiaire (ZW) se produit sans charge à l'aide des embrayages de synchronisation (K4, K5), le travail de synchronisation étant effectué par l'embrayage (K5) de la 5ème vitesse lors du changement de vitesse en haut et par l'embrayage (K4) de la quatrième vitesse lors de la rétrogradation de vitesse, l'accouplement (K4, K5)) de la 4ème ou de la 6ème vitesse précédente non actif en 5ème vitesse est respectivement découplé et l'embrayage de synchronisation afférent (K5, K4) engagé ensuite brièvement.

5. Transmission à réglage continu selon l'une des revendications précédentes, caractérisée en ce que
le rapport d'engrenage du premier jeu de satellites (I) est moins 4,0 et que le rapport d'engrenage du deuxième jeu de satellites (II) est de moins 3,0.

6. Transmission à réglage continu selon les revendications 1 à 5, caractérisée en ce que

celle-ci est montée dans un véhicule sur le plan de la propulsion et que son entraînement est conçu de sorte que les vitesses, dans les positions extrêmes de l'engrange de réglage hydrostatique (HG), soient respectivement de 0,84 km/h pour la plage de démarrage et de 1,39; 2,32; 3,87; 6,45; 10,75; 17,9; 29,9 et 49,8 km/h pour les 8 vitesses, la vitesse de rotation du moteur étant réglée, programmée constamment.

7. Transmission à réglage continu selon l'une des revendications précédentes,
caractérisée en ce que
l'arbre d'entrée (ASW) est l'arbre total d'un engrenage différentiel (DG), dont les arbres menés (AW1, AW2) sont reliés à des roues motrices d'un véhicule.

8. Transmission à réglage continu selon la revendication 7,
caractérisée en ce que
l'engrenage différentiel (DG) présente un blocage commandé du différentiel.

9. Transmission à réglage continu selon l'une des revendications précédentes,
caractérisée en ce que
le dispositif de commande (ST), formant un circuit de réglage, commande la transmission en dépendance de la position d'un commutateur sélecteur de fonctions (BAS),
- un signal de consigne provenant d'un transmetteur de signaux d'un levier de vitesse (FH) et un signal effectif du rapport de transmission respectif, résultant du rapport respectif du signal de vitesse de sortie (SA) et du signal de vitesse d'entrée (S1), étant lancés, dans le cadre d'un premier réglage de mode opératoire,
et
- un signal de consigne étant formé par un détecteur de position d'une pédale d'accélérateur (GP) en relation avec un point de fonctionnement d'une consommation minimale de carburant, détecté dans un réseau caractéristique du moteur et un signal effectif du rapport respectif de transmission entre la vitesse de sortie (SA) et la vitesse d'entrée (S1)étant lancé, dans le cadre d'un deuxième réglage de mode opératoire,
et,
une vitesse de rotation prédéterminée d'un rendement maximal du moteur servant de signal de consigne et la vitesse d'entrée (S1) servant de signal effectif, dans le cadre d'un troisième réglage de mode opératoire,
et
un signal de consigne étant lancé par le détecteur de position du levier de vitesse (FH) ou de la pédale d'accélérateur (GP), et le signal de vitesse de rotation de sortie (SA) servant de signal effectif.

10. Transmission à réglage continu selon la revendication 9, caractérisée en ce que,
selon la position d'un transmetteur de signaux, l'engrenage hydostatique (HG) est ajusté dans une position neutre à chaque fois qu'une différence se produit entre le signal de consigne et le signal effectif, laquelle différence correspond à une position située dans un domaine de transmission.

11. Transmission à réglage continu selon la revendication 10,
caractérisée en ce
le transmetteur de signaux pour la mise au point neutre de l'engrenage hydrostatique (HG) est un bouton poussoir électrique équipant le levier de vitesse.

12. Transmission à réglage continu selon la revendication 10 ou 11,
caractérisée en ce que
l'arbre de sortie (KW) de l'engrenage de réglage hydrostatique (HG) est équipé d'un accouplement auxiliaire (HK) pouvant être commandé par le dispositif de commande (ST) et assurant le couplage actif entre le dit arbre de sortie et l'arbre de roues solaires, par le degré d'engenage (Z) ou, dans une autre position (HK2), couple, en arrêtant, l'arbre de roues solaires (SW) et la boîte de vitesse (GG) par le degré d'engrenage (Z) ou, dans une position moyenne (HK0), laisse le dit arbre de sortie et l'arbre de roues solaires (SW) déconnectés et tournant librement.

13. Transmission à réglage continu selon la revendication 12,
caractérisée en ce que,
le dispositif de commande (ST), dans l'un des modes opérationnels programmables, dans un réglage respectif prédéterminé d'un domaine de vitesse, met l'accouplement auxiliaire (HK) en position normale (HK1) et l'engrenage de réglage (HG) en position neutre, l'accouplement auxiliaire (HK) étant ensuite commuté dans l'autre position (HK2) qui arrête l'arbre de roues solaires (SW).

14. Transmission à réglage continu selon la revendications 12 ou 13,
caractérisée en ce que
le dispositif de commande (ST), en dépendance d'un signal de commande programmable, par rapport à un changement de vitesse, meut l'engrenage de réglage hydrostatique (HG) dans sa position extrême suivante, puis embraye la vitesse suivante, l'embrayage de la vitesse précédente demeurant couplé par commande, et l'accouplement auxiliaire (HK) étant amené ensuite en position moyenne (HK0).

15. Transmission à réglage continu selon l'une des revendications 12 à 14,
caractérisée en ce que
le dispositif de commande (ST), en dépendance d'un signal de mode opérationnel programmable, dans chaque domaine de vitesse prédéterminé et en dépendance d'une divergence respective du signal effectif correspondant à une déviation plus faible, l'engrenage de réglage hydrostatique (HG)
- ou bien adopte sa position neutre, tandis que l'accouplement auxiliaire (HK) est mis dans sa position normale (HK1), puis met l'accouplement auxiliaire (HK) en position (HK2) arrêtant l'arbre de roues solaires (SW)
- ou bien provoque la mise de l'accouplement auxiliaire (HK) dans sa position normale (HK), l'engrenage de réglage hydrostatique (HG) adoptant ensuite sa position extrême, dans laquelle l'accouplement auxiliaire (HK) est conduit en posi-tion moyenne (HK0).

16. Transmission à réglage continu selon l'une des revendications 12 à 14,
caractérisée en ce que
le dispositif de commande (ST), en dépendance d'un signal programmable signalisant un freinage à fond ou un état d'urgence, conduit l'accouplement auxiliaire (HK) en position moyenne (HKO).

17. Transmission à réglage continu selon l'une des revendications 9 à 16,
caractérisée en ce que
le dispositif de commande (ST), en cas de signal d'actionnement d'une pédale de frein (BP), compare continuellement le signal de vitesse d'entrée du détecteur de vitesse (S1) avec un premier signal de comparaison, qui correspond à une vitesse de consigne programmée supérieure à une vitesse donnée de ralenti du moteur, et, selon chaque divergence respective, effectue la séquence nécessaire à sa réduction, et que le dispositif de commande (ST) compare constamment le signal de vitesse d'entrée avec un signal de vitesse programmée de ralenti du moteur et désaccouple les embrayages en groupe (K6, K7) par l'intermédiaire des soupapes (V6, V7), si le signal n'est pas atteint, puis contrôle continuellement, par comparaison entre les signaux de vitesse d'entrée (S1, S2) et le signal de vitesse de sortie (SA), s'il y a vitesse de rotation synchrone à l'un de ces embrayages en groupe (K6, K7) et, si c'est le cas, réengage celui-ci.

18. Transmission à réglage continu selon la revendication 18,
caractérisée en ce que
le dispositif de commande (ST) compare constamment le signal de vitesse d'entrée (S1) avec un signal de vitesse maximum programmé et, si celui-ci est surpassé, fait passer à la vitesse supérieure, suivante.

19. Transmission à réglage continu selon l'une des revendications précédentes,
caractérisée en ce que
les soupapes (V1, V5, V6, 7) des embrayages (K1, K5) de la première vitesse et de la cinquième vitesse et les embrayages en groupe (K6, K7) sont conçus et raccordés de sorte qu'ils sont débrayés à l'état sans courant.

20. Transmission à réglage continu selon l'une des revendications précédentes,
caractérisée en ce que
le dispositif de commande (ST), dans un mode opérationnel programmable, règle l'engrenage, entièrement hydrostatiquement, sans division de puissance en commandant l'engagement simultané des embrayages respectifs (K0, K1, K5; K1, K2, K5; K1, K2, K3; K1, K3, K4) d'une vitesse précédant une vitesse programmée, ainsi que l'embrayage de la vitesse sélectionnée et l'un des embrayages en groupe (K6, K7), et en amenant les accouplements (KV, KR) d'engrenage de renversement en position neutre jusqu'à ce qu'il soit signalé que l'engrenage de réglage (HG) se trouve dans l'une des positions extrêmes et qu'il y a synchronisation de vitesse à l'un des accouplements (KV, KR) d'engrenage de renversement, ce sur quoi celui-ci est engagé par commande et celle des deux vitesses qui n'est pas programmée est débrayée, ce dont il résulte un passage du mode à division de puissance au mode sans division de puissance ou vice-versa, de la ou à la plus élevée des deux boîtes de vitesses embrayées.

**21.** Transmission à réglage continu selon la revendication 20,
caractérisée en ce que
le dispositif de commande (ST) est programmé automatiquement en mode opérationnel entièrement hydrostatique quand un freinage par actionnement du levier de vitesse (FH) ou de la pédale de freinage (BP) lui est signalé, lequel freinage dépasse une valeur limite de consigne.

**22.** Transmission à réglage continu avec une division de puissance hydrostatico-mécanique par engrenage de réglage hydrostatique (HG), un double engrenage planétaire (I, II) à quatre arbres et boîte de vitesse connectée aval, un arbre d'entrée (EW) étant couplé opérationnellement en permanence à l'engrenage de réglage (HG), par l'intermédiaire d'un premier engrenage droit (SG1), et pouvant être couplé par commande à un arbre formant un pont (EP1) entre les satellites du deuxième engrenage planétaire (II) et au pignon extérieur (AKI) du premier engrenage planétaire (I), et un arbre de sortie (KW) de l'engrenage de réglage hydrostatique (HG) étant relié, par l'intermédiaire d'un gradin d'engrenage (Z), à un arbre de roues solaires (SW), sur lequel les deux roues solaires (SRI, SRII) des engrenages planétaires (I, II) sont disposées., et un arbre à pont (AP1) du premier engrenage planétaire (I) pouvant être couplé par commande à un deuxième arbre intermédiaire (ZW), en passant par un engrenage de lère vitesse et un embrayage afférent (K3) d'une 3ème vitesse, alors qu'un arbre à roues extérieures (AP2) du deuxième engrenage planétaire (II) peut être couplé par commande à l'arbre intermédiaire (ZW), en passant par d'autres boîtes de vitesses et des embrayages (K2, K4) afférents d'une 2ème et d'une 4ème vitesses, et un arbre de sortie de transmission (ASW) pouvant être couplé à l'arbre intermédiaire (ZW),
caractérisée en ce que
  - l'arbre intermédiaire (ZW) peut être couplé, par l'intermédiaire d'un engrenage d'une première vitesse, avec un embrayage (K1) commandable et, le cas échéant, avec un embrayage (K5) commandable d'une cinquième vitesse, à l'arbre à pont (AP1),
  - l'arbre d'entrée (EW) peut tre couplé avec l'arbre à pont (EPI), par l'intermédiaire d'un engrenage de renversement (WG) engageable,
  - un engrenage intermédiaire (ZG), coopérant avec l'arbre à roues solaires (SW), peut être couplé avec l'arbre intermédiaire (ZW), par l'intermédiaire d'un embrayage (K0) commandé séparément, et qu'un dispositif de commande (ST), dans un mode opérationnel programmable règle l'engrenage, entièrement hydrostatiquement, sans division de puissance en commandant l'engagement simultané des embrayages respectifs (K0, K1, K5; K1, K2, K5; K1, K2, K3; K1, K3, K4) d'une vitesse précédant une vitesse programmée, ainsi que l'embrayage de la vitesse sélectionnée, et en amenant les accouplements (KV, KR) d'engrenage de renversement en position neutre jusqu'à ce qu'il soit signalisé que l'engrenage de réglage (HG) se trouve dans l'une des positions extrêmes et qu'il y a synchronisation de vitesse à l'un des accouplements (KV, KR) d'engrenage de renversement, ce sur quoi celui-ci est engagé par commande et celle des deux vitesses qui n'est pas programmée est débrayée, ce dont il résulte un passage du mode à division de puissance-au mode sans division de puissance ou vice-versa, de la ou à la plus élevée des deux boîtes de vitesses embrayées.

**23.** Transmission à réglage continu selon la revendication 22,
caractérisée en ce que
le dispositif de commande (ST) est programmé automatiquement en mode opérationnel entièrement hydrostatique quand un freinage par actionnement du levier de vitesse (FH) ou de la pédale de freinage (BP) lui est signalé, lequel freinage dépasse une valeur limite de consigne.

Fig. 1

EP 0 464 413 B1

Fig. 2

26

Fig. 3

Fig. 4

EP 0 464 413 B1

Fig. 5